(19) Europäisches Patentamt
European Patent Office
Office européen des brevets

(11) EP 3 674 336 A1

# (12) EUROPEAN PATENT APPLICATION

(43) Date of publication:
**01.07.2020 Bulletin 2020/27**

(21) Application number: **19218680.7**

(22) Date of filing: **20.12.2019**

(51) Int Cl.:
***C08F 220/18*** (2006.01) ***C08F 265/06*** (2006.01)
***C08G 18/62*** (2006.01) ***C09J 4/06*** (2006.01)
***C09J 133/08*** (2006.01) ***C09J 175/04*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2018 JP 2018243908**

(71) Applicant: **Nitto Denko Corporation**
**Ibaraki-shi, Osaka 567-8680 (JP)**

(72) Inventors:
- **NIWA, Masahito**
**Ibaraki-shi, Osaka 567-8680 (JP)**
- **WATANABE, Shigeki**
**Ibaraki-shi, Osaka 567-8680 (JP)**
- **NISHIWAKI, Masataka**
**Ibaraki-shi, Osaka 567-8680 (JP)**
- **MINOURA, Kazuki**
**Ibaraki-shi, Osaka 567-8680 (JP)**

(74) Representative: **Müller-Boré & Partner Patentanwälte PartG mbB**
**Friedenheimer Brücke 21**
**80639 München (DE)**

## (54) PRESSURE-SENSITIVE ADHESIVE COMPOSITION

(57) Provided is a PSA composition with greatly reduced dependence on fossil-resource-based materials while comprising an acrylic PSA. The PSA composition provided includes a PSA. The PSA is an acrylic PSA including an acrylic polymer. The acrylic polymer is formed from monomers including more than 50 % (by weight) acrylic monomer. At least 50 % of all carbons in the PSA are biomass-based carbons.

[Fig. 1]

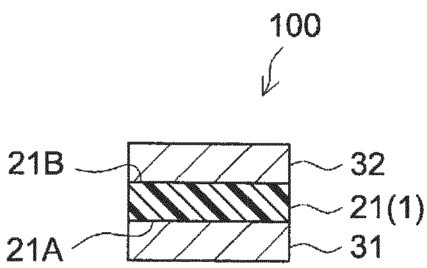


EP 3 674 336 A1

## Description

The present invention relates to a pressure-sensitive adhesive composition.

In general, pressure-sensitive adhesive (PSA) exists as a soft solid (a viscoelastic material) in a room temperature range and has a property to adhere easily to an adherend with some pressure applied. With such properties, PSA is widely used as a joining means having high operability and high reliability of adhesion typically in the form of a PSA sheet including a layer of the PSA in various industrial fields such as home appliances, automobiles, various types of machinery, electrical equipment, and electronic equipment.

In late years, much attention has been placed on environmental problems such as global warming with expectations for reducing the usage of materials based on fossil resources such as petroleum. Under such circumstances, it is also desired in the PSA field to reduce the usage of fossil-resource-based materials.

In this regard, Japanese Patent Application Publication No. 2014-196471 teaches a double-faced PSA tape for fixing electronic device parts, with the PSA tape having a PSA layer that has a biomass degree of at least 50 % (Claim 1, etc.). Here, the term "biomass degree" refers to the ratio of the weight of plant-derived materials to the total weight of all materials used to form the PSA composition (paragraph 0017). Japanese Patent Application Publication No. 2014-196471 describes specific working examples of polyester-based and rubber-based PSA with high biomass degrees, but no working examples are given for acrylic PSA with a high biomass degree.

Japanese Patent No. 5975979 relates to a PSA composition comprising a polymer (copolymer) that includes, as an essential component, a (meth)acrylate ester of a 2-alkylalkanol having a molar average number of carbon atoms of 12 to 32 (Claim 1, etc.). Japanese Patent No. 5975979 cites, as preferable (meth)acrylate ester monomers, esters of alcohols derived from renewable resources and (meth)acrylic acid (paragraph 0030); however, no specific working example includes the use of a (meth)acrylate ester monomer that is an ester of an alcohol derived from a renewable resource and (meth)acrylic acid.

Moreover, in all working examples described in Japanese Patent No. 5975979, as much as 50 parts to 100 parts by weight of Regalrez® 1094 which is a hydrogenated C9 petroleum resin (i.e. a petroleum-derived material) or Arkon® P90 which is a hydrocarbon tackifier resin is used to 100 parts by weight of resin (paragraphs 0058, 0094 and 0109, Tables 6 and 9 to 11 in Japanese Patent No. 5975979). As evident from this, with respect to the PSA disclosed in Japanese Patent No. 5975979, the effort falls short of reducing the dependence on fossil-resource-based materials.

An objective of this invention is thus to provide a PSA composition with reduced dependence on fossil-resource-based materials while comprising an acrylic PSA. Another related objective is to provide a PSA sheet having a PSA layer formed from such a PSA composition.

The present description provides a PSA composition comprising a PSA. The PSA is an acrylic PSA comprising an acrylic polymer. The acrylic polymer is formed from monomers (a monomer mixture) comprising more than 50 % (by weight) acrylic monomer. At least 50 % of all carbons in the PSA are biomass-based carbons. In other words, the PSA has a biomass carbon ratio of 50 % or higher. According to the PSA composition comprising an acrylic PSA with such a high biomass carbon ratio, the dependence on fossil resources can be greatly reduced. It is more preferable that at least 60 % of all carbons in the PSA are biomass-derived carbons.

In some embodiments, the monomers include more than 70 % (by weight) alkyl (meth)acrylate having, at the ester terminus, a biomass-derived alkyl group with 12 or more carbon atoms. According to the monomer mixture having such a composition, the resulting PSA is likely to have a high biomass carbon ratio.

In some embodiments, the alkyl (meth)acrylate may include a branched alkyl (meth)acrylate having, at the ester terminus, a biomass-derived branched alkyl group with 12 or more carbon atoms. With the use of the branched alkyl (meth)acrylate, the biomass carbon ratio can be effectively increased while inhibiting the crystallization of alkyl group. From the standpoint of favorably obtaining the crystallization-inhibiting effect, the branched alkyl (meth)acrylate preferably accounts for at least 20 % by weight (e.g. 20 % or more and 100 % or less by weight) of the alkyl (meth)acrylate.

In some embodiments, the monomers may include two or more species of alkyl (meth)acrylate having different biomass-derived alkyl groups with 12 or more carbon atoms. Good adhesive properties tend to be favorably combined with a high biomass carbon ratio when the two or more species of alkyl (meth)acrylate with different alkyl groups are used as the alkyl (meth)acrylate having, at the ester terminus, a biomass-derived alkyl group with 12 or more carbon atoms.

In some embodiments, the monomer mixture includes more than 1 % (by weight) carboxy group-containing monomer. In the acrylic PSA having a high biomass carbon ratio, when the carboxy group-containing monomer content is above 1 % by weight, the PSA's cohesiveness can be effectively enhanced to obtain greater adhesive properties. This can bring about a PSA that favorably combines good adhesive properties and a high biomass ratio.

In some embodiment, the monomers may include a carboxy group-containing monomer and a hydroxy group-containing monomer. In such an embodiment, the carboxy group-containing monomer content $W_{COOH}$ is preferably at least 0.5 times (by weight) the hydroxy group-containing monomer content $W_{OH}$. In other words, it preferably satisfies $W_{COOH}/W_{OH} \geq 0.5$. According to the monomer mixture having such a composition, in the acrylic PSA having a high biomass carbon ratio, the PSA's cohesiveness can be effectively enhanced to obtain greater adhesive properties. This

can bring about a PSA that favorably combines good adhesive properties and a high biomass ratio.

In some embodiments, the PSA may further include a tackifier. The use of tackifier can bring about greater adhesive properties. As the tackifier, it is preferable to use a species in which at least 50 % of all carbons are biomass-derived carbons. Such a tackifier is preferable because the PSA's biomass carbon ratio will not be below 50 % regardless of the amount used.

The present description provides a PSA sheet having a PSA layer formed from a PSA composition disclosed herein. Such a PSA sheet is preferable because, with the PSA layer formed of an acrylic PSA having a biomass carbon ratio of at least 50 %, the dependence on fossil-resource-based materials can be greatly reduced.

Fig. 1 shows a cross-sectional diagram schematically illustrating the constitution of the PSA sheet according to an embodiment.

Fig. 2 shows a cross-sectional diagram schematically illustrating the constitution of the PSA sheet according to another embodiment.

Fig. 3 shows a cross-sectional diagram schematically illustrating the constitution of the PSA sheet according to another embodiment.

Preferred embodiments of the present invention are described below. Matters necessary to practice this invention other than those specifically referred to in this description may be comprehended by a person of ordinary skill in the art based on the instruction regarding implementations of the invention according to this description and the common technical knowledge in the pertinent field. The present invention can be practiced based on the contents disclosed in this description and common technical knowledge in the subject field.

In the drawings referenced below, a common reference numeral may be assigned to members or sites producing the same effects, and duplicated descriptions are sometimes omitted or simplified. The embodiments described in the drawings are schematized for clear illustration of the present invention, and do not necessarily represent the accurate sizes or reduction scales of products that are actually provided.

As used herein, the term "PSA" refers to, as described earlier, a material that exists as a soft solid (a viscoelastic material) in a room temperature range and has a property to adhere easily to an adherend with some pressure applied. As defined in "Adhesion: Fundamental and Practice" by C. A. Dahlquist (McLaren & Sons (1966), P. 143), PSA referred to herein can generally be a material that has a property satisfying complex tensile modulus E* (1Hz) $< 10^7$ dyne/cm$^2$ (typically, a material that exhibits the described characteristics at 25 °C).

As used herein, the biomass-derived carbon refers to carbon (renewable carbon) derived from a biomass material, that is, a material derived from a renewable organic resource. The biomass material refers to a material derived from a bioresource (typically a photosynthetic plant) that is continuously renewable typically in the sole presence of sun light, water and carbon dioxide. Accordingly, the concept of biomass material excludes materials based on fossil resources (fossil-resource-based materials) that are exhausted by using after mining. The PSA's biomass carbon ratio (i.e. the ratio of biomass-derived carbons to the total carbon content of the PSA) can be estimated from the carbon-14 isotope content determined based onASTM D6866.

As used herein, the "acrylic monomer" refers to a monomer having at least one (meth)acryloyl group per molecule. The "(meth)acryloyl" here comprehensively refers to acryloyl and methacryloyl. Thus, the concept of acrylic monomer here encompasses both a monomer having an acryloyl group (acrylic monomer) and a monomer having a methacryloyl group (methacrylic monomer).

Herein, the term "active energy ray" in this description refers to an energy ray having energy capable of causing a chemical reaction such as polymerization, crosslinking, initiator decomposition, etc. Examples of the active energy ray herein include lights such as ultraviolet (UV) rays, visible lights, infrared lights, radioactive rays such as $\alpha$ rays, $\beta$ rays, $\gamma$ rays, electron beam, neutron radiation, and X rays.

<PSA composition>

The form of the PSA composition disclosed herein is not particularly limited. For instance, it can be an aqueous PSA composition, solvent-based PSA composition, hot-melt PSA composition, or active energy ray-curable PSA composition. Here, the aqueous PSA composition refers to a PSA composition comprising a PSA (PSA layer-forming components) in a solvent (an aqueous solvent) primarily comprising water and the concept encompasses a water-dispersed PSA composition in which the PSA is dispersed in water and a water-soluble PSA composition in which the PSA is dissolved in water. The solvent-based PSA composition refers to a PSA composition comprising a PSA in an organic solvent.

(Biomass carbon ratio)

The PSA composition disclosed herein is characterized by comprising a PSA that has a biomass carbon ratio (or biobased content) of 50 % or higher. A high biomass carbon ratio of the PSA means low usage of fossil-resource-based materials typified by petroleum and the like. From such a standpoint, it can be said that the higher the biomass carbon ratio of the PSA is, the more preferable it is. For instance, the biomass carbon ratio of the PSA can be 55 % or higher, 60 % or higher, 70 % or higher, 75 % or higher, 80 % or higher, or even above 80 %. The maximum biomass carbon ratio is 100 % by definition. From the standpoint of the material availability, it is typically 95 % or lower. From the standpoint of readily obtaining good adhesive properties, in some embodiments, the PSA can have a biomass carbon ratio of, for instance, 92 % or lower, 90 % or lower, or even 88 % or lower.
It is noted that the biobased content of conventional general acrylic PSA is about zero to 30 %; or at most, it is less than 40 %.

(Acrylic polymer)

The PSA composition disclosed herein comprises, as the PSA, an acrylic PSA comprising an acrylic polymer. The term "acrylic polymer" here refers to a polymer derived from a monomer mixture that includes more than 50 % (by weight) acrylic monomer. The acrylic monomer content in the monomer mixture is preferably 70 % by weight or higher, or even 80 % by weight or higher. In some embodiments, the acrylic monomer content in the monomer mixture can be 90 % by weight or higher, 95 % by weight or higher, or even 100 % by weight. On the other hand, in view of the balance of adhesive properties, in some embodiments, the ratio of acrylic monomer in the entire monomer mixture can be, for instance, below 99 % by weight, below 95 % by weight, or below 93 % by weight.
The monomers forming the acrylic polymer preferably include an alkyl (meth)acrylate. According to a monomer mixture having such a composition, the resulting PSA is likely to show good adhesive properties. The ratio of alkyl (meth)acrylate in the entire monomer mixture is preferably 30 % by weight or higher, more preferably 50 % by weight or higher, possibly 70 % by weight or higher, 80 % by weight or higher, 85 % by weight or higher, or even 90 % by weight or higher. The monomer mixture may have a composition consisting of one, two or more species of alkyl (meth)acrylate. On the other hand, in view of the balance of adhesive properties, in some embodiments, the ratio of alkyl (meth)acrylate in the entire monomer mixture can be, for instance, below 99 % by weight, below 95 % by weight, or below 93 % by weight.
As the alkyl (meth)acrylate, it is preferable to use a $C_{1-36}$ alkyl (meth)acrylate, that is, an alkyl (meth)acrylate having an alkyl group with 1 to 36 carbon atoms at the ester terminus. When the alkyl group has three or more carbon atoms, it can be linear or branched.
Non-limiting specific examples of the $C_{1-36}$ alkyl (meth)acrylate include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, stearyl (meth)acrylate, isostearyl (meth)acrylate, nonadecyl (meth)acrylate, eicosyl (meth)acrylate, heneicosyl (meth)acrylate, docosyl (meth)acrylate, tricosyl (meth)acrylate, tetracosyl (meth)acrylate, pentacosyl(meth)acrylate, hexacosyl(meth)acrylate, heptacosyl(meth)acrylate, octacosyl (meth)acrylate, nonacosyl(meth)acrylate, triacontyl(meth)acrylate, hentriacontyl (meth)acrylate, dotriacontyl(meth)acrylate, tritriacontyl(meth)acrylate, tetratriacondyl (meth)acrylate, pentatriacontyl(meth)acrylate, hexatriacontyl(meth)acrylate, and a compound having a structure represented by the formula (1) described later.
In some embodiments, the monomer mixture may include, as the alkyl (meth)acrylate, an alkyl (meth)acrylate having a biomass-derived alkyl group at the ester terminus. The alkyl (meth)acrylate having a biomass-derived alkyl group at the ester terminus is typically an ester of a biomass-derived alkanol and a biomass-derived or non-biomass-derived (meth)acrylic acid. Examples of the biomass-derived alkanol include biomass ethanol and alkanols derived from plant materials such as palm oil, palm kernel oil and coconut oil. When the biomass-derived alkanol has three or more carbon atoms, it can be linear or branched. Examples of the biomass-derived branched alkanol include a biomass-derived β-branched alcohol. The β-branched alcohol can be a Guerbet alcohol formed by the Guerbet reaction of a biomass-derived alkanol (e.g. a biomass-derived linear alkanol).
Atypical example of the alkyl (meth)acrylate having a biomass-derived alkyl group at the ester terminus is an ester of a biomass-derived $C_{1-36}$ alkanol and non-biomass-derived (meth)acrylic acid. In such an alkyl (meth)acrylate, the higher the number of carbon atoms of the alkanol is, the higher the ratio (by number) of biomass-derived carbons to the total number of carbon atoms in the alkyl (meth)acrylate (i.e. the biobased content of the alkyl (meth)acrylate) is. Accordingly, from the standpoint of increasing the biomass carbon ration, it is preferable to use, as a monomer, an alkyl (meth)acrylate having a biomass-derived $C_{12}$ or higher alkyl group at the ester terminus. Hereinafter, an alkyl (meth)acrylate having a biomass-derived $C_{12}$ or higher alkyl group at the ester terminus may be referred to as a "long bio-alkyl (meth)acrylate." Also, hereinafter, a branched alkyl (meth)acrylate having a biomass-derived branched $C_{12}$ or higher alkyl group at the ester terminus may be referred to as a "branched long bio-alkyl (meth)acrylate."

From the standpoint of increasing the biomass carbon ratio, the art disclosed herein can be preferably implemented in an embodiment where the long bio-alkyl (meth)acrylate includes a long bio-alkyl (meth)acrylate having, at the ester terminus, a biomass-derived alkyl group of $C_{14}$ or higher, $C_{16}$ or higher, $C_{18}$ or higher, $C_{20}$ or higher, $C_{22}$ or higher, or $C_{24}$ or higher. In some preferable embodiments of the art disclosed herein, the long bio-alkyl (meth)acrylate in the description below can be a long bio-alkyl (meth)acrylate having, at the ester terminus, a biomass-derived alkyl group of $C_{14}$ or higher, $C_{16}$ or higher, $C_{18}$ or higher, $C_{20}$ or higher, $C_{22}$ or higher, or $C_{24}$ or higher. In other preferable embodiments, the branched long bio-alkyl (meth)acrylate in the description below can be a branched long bio-alkyl (meth)acrylate having, at the ester terminus, a biomass-derived alkyl group of $C_{14}$ or higher, $C_{16}$ or higher, $C_{18}$ or higher, $C_{20}$ or higher, $C_{22}$ or higher, or $C_{24}$ or higher. In the art disclosed herein, as long as a desirable biomass carbon ratio is obtained, it is allowed to replace part or all of a compound comprising biomass-derived carbons with a compound that has the same chemical structure, but a lower biomass carbon ratio (possibly a compound free of biomass-derived carbons).

The art disclosed herein can be preferably implemented in an embodiment where the monomer mixture includes a long bio-alkyl (meth)acrylate. The biomass-derived alkyl group of the long bio-alkyl (meth)acrylate can be linear or branched. Because the long bio-alkyl (meth)acrylate has a high biobased content by itself, when used as a monomer, it may effectively contribute to an increase in biomass carbon ratio of the PSA. From the standpoint of increasing the biomass carbon ratio of the PSA, it is advantageous to have a higher ratio of the long bio-alkyl (meth)acrylate in the monomer mixture. This ratio is, for instance, possibly 10 % by weight or higher, usually suitably 30 % by weight or higher, preferably 50 % by weight or higher, or more preferably 70 % by weight or higher. The art disclosed herein can be favorably implemented in an embodiment where the ratio of the long bio-alkyl (meth)acrylate in the monomer mixture is above 70 % by weight (e.g. above 70 % by weight and below 100 % by weight). In some embodiments, this ratio can be 75 % by weight or higher, 85 % by weight or higher, or even 100 % by weight (i.e. an embodiment where the monomer mixture consists of one, two or more species of long bio-alkyl (meth)acrylate). On the other hand, for reducing the material cost and adjusting the adhesive properties, in some embodiments, the monomer mixture may include an alkyl (meth)acrylate having a non-biomass-based $C_{12}$ or higher alkyl group at the ester terminus, or an alkyl (meth)acrylate having a biomass-based or non-biomass-based $C_{1-11}$ alkyl group at the ester terminus. Accordingly, in some embodiments, the ratio of the long bio-alkyl (meth)acrylate in the entire monomer mixture can be, for instance, below 99 % by weight, below 95 % by weight, below 93 % by weight, below 80 % by weight, or even below 70 % by weight.

In an embodiment where the monomer mixture includes a long bio-alkyl (meth)acrylate, from the standpoint of increasing the biomass carbon ratio of the PSA, it is advantageous to have a high ratio of long bio-alkyl (meth)acrylate in the entire alkyl (meth)acrylate content of the monomer mixture. This ratio is, for instance, possibly 30 % by weight or higher, preferably 50 % by weight or higher, more preferably 75 % by weight or higher, possibly 90 % by weight or higher, 95 % by weight or higher, or even 100 % by weight. The art disclosed herein can be favorably implemented in an embodiment where essentially all (typically at least 99 % by weight or possibly 100 % by weight) of the alkyl (meth)acrylate content in the monomer mixture is a long bio-alkyl (meth)acrylate. On the other hand, from the standpoint of reducing the material cost and adjusting the adhesive properties, in some embodiments, as far as the PSAs biomass carbon ratio does not decrease to below 50 %, the monomer mixture may include an alkyl (meth)acrylate having a non-biomass-derived $C_{12}$ or higher alkyl group at the ester terminus, or an alkyl (meth)acrylate having a biomass-derived or non-biomass-derived $C_{1-11}$ alkyl group at the ester terminus. Accordingly, in some embodiments, the ratio of the long bio-alkyl (meth)acrylate in the alkyl (meth)acrylate content of the monomer mixture can be, for instance, below 99 % by weight, below 95 % by weight, below 93 % by weight, below 80 % by weight, or even below 70 % by weight.

With respect to the ester end alkyl group of the alkyl (meth)acrylate, with increasing number of carbon atoms, the alkyl group tends to readily undergo crystallization. Excessive crystallization of the alkyl group in the PSA may cause degradation of the adhesive properties, the performance stability, etc. As compared to a linear alkyl group, a branched alkyl group generally leads to a lower tendency for the alkyl group to crystallize even when the alkyl group has a high number of carbon atoms. From such a standpoint, in some embodiments where the monomer mixture includes long bio-alkyl (meth)acrylate, it is preferable that at least some of the long bio-alkyl (meth)acrylate is a branched long bio-alkyl (meth)acrylate. With the use of the branched long bio-alkyl (meth)acrylate, while inhibiting the crystallization of alkyl group, the ratio of the long bio-alkyl (meth)acrylate in the monomer mixture can be increased to effectively increase the biomass carbon ratio.

The ratio of the branched long bio-alkyl (meth)acrylate in the entire long bio-alkyl (meth)acrylate content of the monomer mixture is suitably 5 % by weight or higher, or possibly 10 % by weight or higher. From the standpoint of favorably obtaining the crystallization-inhibiting effect, the ratio of the branched long bio-alkyl (meth)acrylate in the long bio-alkyl (meth)acrylate content is preferably 20 % by weight or higher, possibly 50 % by weight or higher, 70 % by weight or higher, or even 90 % by weight or higher. The art disclosed herein can be favorably implemented in an embodiment where essentially all (typically at least 99 % by weight or possibly 100 % by weight) of the long bio-alkyl

(meth)acrylate content in the monomer mixture is a branched long bio-alkyl (meth)acrylate. On the other hand, for reducing the material cost and adjusting the adhesive properties, in some embodiments, the ratio of the branched long bio-alkyl (meth)acrylate in the long bio-alkyl (meth)acrylate content can be, for instance, below 99 % by weight, below 95 % by weight, below 93 % by weight, below 80 % by weight, or even below 70 % by weight.

The ratio of the branched long bio-alkyl (meth)acrylate in the entire monomer mixture is, for instance, possibly 10 % by weight or higher, usually suitably 30 % by weight or higher, preferably 50 % by weight or higher, or more preferably 70 % by weight or higher. The art disclosed herein can be favorably implemented in an embodiment where the ratio of the branched long bio-alkyl (meth)acrylate in the entire monomer mixture is above 70 % by weight (e.g. above 70 % by weight and below 100 % by weight). In some embodiments, this ratio can be 75 % by weight or higher, 85 % by weight or higher, or even 100 % by weight (i.e. an embodiment where the monomer mixture consists of one, two or more species of branched long bio-alkyl (meth)acrylate). On the other hand, for reducing the material cost and adjusting the adhesive properties, in some embodiments, the ratio of the branched long bio-alkyl (meth)acrylate in the entire monomer mixture can be, for instance, below 99 % by weight, below 95 % by weight, below 93 % by weight, below 80 % by weight, or even below 70 % by weight.

The branched long bio-alkyl (meth)acrylate that can be preferably used as a monomer include a compound having a structure represented by the following formula (1):

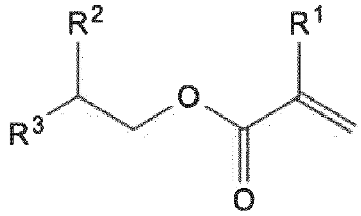

(1)

In the formula (1), $R^1$ is a hydrogen atom or a methyl group and $-CH_2CHR^2R^3$ is a biomass-derived branched alkyl group. When the biomass-derived branched alkyl group has 12 or more carbon atoms, $R^2$ and $R^3$ can be independently selected among linear and branched alkyl groups with 4 to 12 carbon atoms while keeping the sum of the numbers of carbon atoms $R^2$ and $R^3$ between 10 and 34 (when the biomass-derived branched alkyl group has 14 or more carbon atoms, between 12 and 34; when 16 or more, between 14 and 34; when 18 or more, between 16 and 34; when 20 or more, between 18 and 34; when 22 or more, between 20 and 34; when 24 or more, between 22 and 34).

From the standpoint of inhibiting the crystallization of alkyl group, in the formula (1), with respect to the alkyl group having a higher number of carbon atoms between $R^2$ and $R^3$, the number of carbon atoms is preferably 20 or lower, more preferably 18 or lower, yet more preferably 16 or lower, possibly 14 or lower, or even 12 or lower. To increase the biobased content of the branched long bio-alkyl (meth)acrylate represented by formula (1), the higher the numbers of carbon atoms of $R^2$ and $R^3$ are, the more advantageous it is. In the alkyl group having a lower number of carbon atoms between $R^2$ and $R^3$, the number of carbon atoms is preferably 6 or higher, more preferably 8 or higher, or possibly 10 or higher. From the standpoint of increasing the biobased content and facilitating the inhibition of crystallization, it is advantageous that the difference in number of carbon atoms between $R^2$ and $R^3$ is not excessively large. The difference in number of carbon atoms between $R^2$ and $R^3$ is, for instance, possibly 6 or smaller, preferably 4 or smaller, or more preferably 2 or smaller. $R^2$ and $R^3$ may have the same number of carbon atoms.

From the standpoint of the ease of mixing when producing the PSA composition, $R^2$ and $R^3$ in formula (1) preferably have linear or semi-linear structures (e.g. a structure of a linear hydrocarbon chain with a side-chain (branch) methyl group). More preferably, both $R^2$ and $R^3$ have linear structures. From the standpoint of the polymerization reactivity and low-temperature properties, a compound having a hydrogen atom for $R^1$ in formula (1), that is, an acrylate is preferable.

Specific preferable examples of the compound represented by formula (1) include, but are not limited to, 2-butyloctyl (meth)acrylate, 2-butyldecyl(meth)acrylate, 2-hexyldecyl(meth)acrylate, 2-octyldecyl(meth)acrylate, 2-hexyldodecyl(meth)acrylate, 2-octyldodecyl(meth)acrylate, 2-decyltetradecyl(meth)acrylate, 2-dodecylhexadecyl (meth)acrylate and 2-tetradecyloctadecyl (meth)acrylate.

In some embodiments, the monomer mixture preferably includes at least 2-decyltetradecyl (meth)acrylate (more preferably 2-decyltetradecyl acrylate). In such an embodiment, the ratio of 2-decyltetradecyl (meth)acrylate in the monomer mixture is, for instance, possibly 10 % by weight or higher, preferably 20 % by weight or higher, or yet more preferably 30 % by weight or higher. From the standpoint of readily obtaining a higher biobased content, this ratio can be 40 % by weight or higher, 50 % by weight or higher, 60 % by weight or higher, 70 % by weight or higher, 80 % by weight or higher, or even 90 % by weight or higher.

In some preferable embodiments of the PSA composition disclosed herein, the monomer mixture may include two or more species of long bio-alkyl (meth)acrylate having different long bio-alkyl groups. The alkyl groups may differ

in number of carbon atoms, in structure (e.g. differences such as linear vs. branched, in length or in location of side chain with branched species), or in both of these. With the combined use of two or more species of long bio-alkyl (meth)acrylate differing in alkyl group's number of carbon atoms and/or structure, the crystallization of alkyl group can be inhibited in the PSA. This can bring about both a high biomass carbon ratio and good adhesive properties in a well-balanced manner. Preferable combinations that can be employed include a combination of two or more species of Guerbet (meth)acrylate differing in alkyl group's number of carbon atoms and a combination of a Guerbet (meth)acrylate and a linear alkyl (meth)acrylate differing in alkyl group's number of carbon atoms.

When two or more species of long bio-alkyl (meth)acrylate are used together, their quantitative ratio is not particularly limited. From the standpoint of readily obtaining suitable effect of the use of two or more species of long bio-alkyl (meth)acrylate, with the total long bio-alkyl (meth)acrylate content of the monomer mixture being 100 % by weight, the ratio of the long bio-alkyl (meth)acrylate species used in the largest quantity is, for instance, preferably 95 % by weight or lower, more preferably 90 % by weight or lower, possibly 80 % by weight or lower, 70 % by weight or lower, or even 60 % by weight or lower.

The monomers forming the acrylic polymer may include an aforementioned alkyl (meth)acrylate and other monomer(s) (copolymerizable monomer(s) or comonomer(s)) that can be copolymerized with the alkyl (meth)acrylate. As the comonomer, a monomer having a polar group (e.g. a carboxy group, hydroxy group, N-containing ring, etc.) can be favorably used. The polar group-containing monomer may be useful for introducing a cross-linking point into the acrylic polymer or increasing the PSA's cohesive strength. For the comonomer, solely one species or a combination of two or more species can be used.

Non-limiting specific examples of the comonomer include the following:

Carboxyl group-containing monomers: for example, acrylic acid, methacrylic acid, carboxyethyl (meth)acrylate, carboxypentyl (meth)acrylate, itaconic acid, maleic acid, fumaric acid, crotonic acid, isocrotonic acid and phthalic acid monohydroxyethyl (meth)acrylate;
Acid anhydride group-containing monomers; e.g. maleic anhydride and itaconic anhydride;
Hydroxy group-containing monomers: for example, hydroxyalkyl (meth)acrylates such as 2-hydroxyethyl(meth)acrylate, 2-hydroxypropyl(meth)acrylate, 2-hydroxybutyl (meth)acrylate, 3-hydroxypropyl(meth)acrylate, 4-hydroxybutyl(meth)acrylate, 6-hydroxyhexyl (meth)acrylate, 8-hydroxyoctyl(meth)acrylate, 10-hydroxydecyl (meth)acrylate, 12-hydroxylauryl(meth)acrylate and (4-hydroxymethylcyclohexyl)methyl (meth)acrylate;
Monomers having a sulfonate group or a phosphate group: for example, styrene sulfonic acid, allyl sulfonic acid, sodium vinylsulphonate, 2-(meth)acrylamide-2-methylpropane sulfonic acid, (meth)acrylamide propane sulfonic acid, sulfopropyl (meth)acrylate, (meth)acryloyloxy naphthalenesulfonic acid and 2-hydroxyethylacryloyl phosphate;
Epoxy group-containing monomers: for example, epoxy group-containing acrylates such as glycidyl (meth)acrylate and (meth)acrylate-2-ethyl glycidyl ether, allyl glycidyl ether and (meth)acrylate glycidyl ether;
Cyano group-containing monomers: for example, acrylonitrile and methacrylonitrile;
Isocyanate group-containing monomers: for example, 2-isocyanatoethyl (meth)acrylate;
Amide group-containing monomers: for example, (meth)acrylamide; N,N-dialkyl (meth)acrylamides such as N,N-dimethyl(meth)acrylamide, N,N-diethyl(meth)acrylamide, N,N-dipropyl(meth)acrylamide, N,N-diisopropyl(meth)acrylamide, N,N-di(n-butyl)(meth)acrylamide and N,N-di(t-butyl) (meth)acrylamide; N-alkyl (meth)acrylamides such as N-ethyl(meth)acrylamide, N-isopropyl(meth)acrylamide, N-butyl(meth)acrylamide and N-n-butyl(meth)acrylamide; N-vinylcarboxylic acid amides such as N-vinylacetamide; a monomer having a hydroxy group and an amide group, for example, N-hydroxyalkyl(meth)acrylamides such as N-(2-hydroxyethyl)(meth)acrylamide, N-(2-hydroxypropyl)(meth)acrylamide, N-(1-hydroxypropyl)(meth)acrylamide, N-(3-hydroxypropyl)(meth)acrylamide, N-(2-hydroxybutyl)(meth)acrylamide, N-(3-hydroxybutyl)(meth)acrylamide, and N-(4-hydroxybutyl)(meth)acrylamide; a monomer having an alkoxy group and an amide group, for example, N-alkoxyalkyl(meth)acrylamides such as N-methoxymethyl(meth)acrylamide, N-methoxyethyl(meth)acrylamide, and N-butoxymethyl(meth)acrylamide; and N,N-dimethylaminopropyl(meth)acrylamide, N-(meth)acryloylmorpholine, etc.

Monomers having a nitrogen atom-containing ring: for example, N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth)acryloylpiperidine, N-(meth)acryloylpyrrolidine, N-vinylmorpholine, N-vinyl-3-morpholinone, N-vinyl-2-caprolactam, N-vinyl-1,3-oxazin-2-one, N-vinyl-3,5-morpholinedione, N-vinylpyrazole, N-vinylisoxazole, N-vinylthiazole, N-vinylisothiazole and N-vinylpyridazine (such as lactams including N-vinyl-2-caprolactam);
Monomers having a succinimide skeleton: for example, N-(meth)acryloyloxy methylene succinimide, N-(meth)acryloyl-6-oxy hexamethylene succinimide and N-(meth)acryloyl-8-oxy hexamethylene succinimide;
Maleimides: for example, N-cyclohexylmaleimide, N-isopropylmaleimide, N-laurylmaleimide and N-phenylmaleimide;
Itaconimides: for example, N-methyl itaconimide, N-ethyl itaconimide, N-butyl itaconimide, N-octyl itaconimide, N-2-ethylhexyl itaconimide, N-cyclohexyl itaconimide and N-lauryl itaconimide;
Aminoalkyl (meth)acrylates: for example, aminoethyl (meth)acrylate, N,N-dimethylaminoethyl (meth)acrylate, N,N-diethylaminoethyl (meth)acrylate and t-butylaminoethyl (meth)acrylate;
Alkoxy group-containing monomers: for example, alkoxyalkyl (meth)acrylates such as 2-methoxyethyl (meth)acrylate, 3-methoxypropyl (meth)acrylate, 2-ethoxyethyl (meth)acrylate, propoxyethyl (meth)acrylate, butoxyethyl (meth)acrylate and ethoxypropyl (meth)acrylate; and alkoxy alkylene glycol (meth)acrylates such as methoxy ethylene glycol (meth)acrylate and methoxy poly(propylene glycol) (meth)acrylate;
Vinyl esters: for example, vinyl acetate and vinyl propionate;
Vinyl ethers: for example, vinyl alkyl ethers such as methyl vinyl ether and ethyl vinyl ether;
Aromatic vinyl compounds: for example, styrene, α-methylstyrene and vinyl toluene;
Olefins: for example, ethylene, butadiene, isoprene and isobutylene;
Alicyclic hydrocarbon group-containing (meth)acrylates: for example, cyclopentyl (meth)acrylate, cyclohexyl (meth)acrylate, isobornyl (meth)acrylate and dicyclopentanyl (meth)acrylate;
Aromatic hydrocarbon group-containing (meth)acrylates: for example, phenyl (meth)acrylate, phenoxyethyl (meth)acrylate and benzyl (meth)acrylate;
Heterocyclic ring-containing (meth)acrylates such as tetrahydrofurfuryl (meth)acrylate, halogen atom-containing (meth)acrylates such as vinyl chloride- and fluorine atom-containing (meth)acrylates, silicon atom-containing (meth)acrylates such as silicone (meth)acrylate, (meth)acrylic esters obtained from terpene compound derivative alcohols, and the like.

When using such a comonomer, its amount used is not particularly limited, but it is usually suitably at least 0.01 % by weight of the total amount of monomers. From the standpoint of obtaining greater effect of the use of the copolymerizable monomer, the amount of copolymerizable monomer used can be 0.1 % by weight or more of the total amount of monomers, or even 1 % by weight or more. The amount of copolymerizable monomer used can be 50 % by weight or less of the total amount of monomers, or preferably 40 % by weight or less. This can prevent the PSA from gaining excessively high cohesive strength, bringing about greater tack at room temperature (25°C).

In some preferable embodiments, the monomers forming the acrylic polymer may include at least a carboxy group-containing monomer as the comonomer. The use of the carboxy group-containing monomer may increase the PSA's cohesive strength to enhance the adhesive properties. As the carboxy group-containing monomer, the examples listed above and the like can be used. Particularly preferable carboxy group-containing monomers include acrylic acid (AA) and methacrylic acid (MAA). Between them, AA is preferable. AA and MAA can be used together.

When a carboxy group-containing monomer is used as the comonomer, its amount used can be, for instance, 0.1 % by weight or more of all monomers, or even 0.5 % by weight or more thereof. In some embodiments, the amount of the carboxy group-containing monomer used can be 1 % by weight or more of all monomers, also above 1 % by weight, 2 % by weight or more, 3 % by weight or more, 5 % by weight or more, or even 6 % by weight or more thereof. With increasing amount of carboxy group-containing monomer used, the cohesive strength of the PSA tends to increase in general. Accordingly, by suitably selecting the amount of carboxy group-containing monomer to be used, the PSA can have a suitable level of cohesive strength even when the monomers forming the acrylic polymer have a composition including a relatively large amount of long alkyl (meth)acrylate. The maximum amount of carboxy group-containing monomer used is not particularly limited. From the standpoint of the miscibility to the alkyl (meth)acrylate, it is usually suitably 20 % by weight or less. The carboxy group-containing monomer can be biomass-derived or non-biomass-derived. When a non-biomass-derived carboxy group-containing monomer is used, from the standpoint of increasing the PSA's biobased content, the amount of carboxy group-containing monomer used is preferably 15 % by weight or less of all monomers, possibly 12 % by weight or less, 10 % by weight or less, or even 8 % by weight or less thereof.

In some preferable embodiments, the monomers forming the acrylic polymer may include at least a hydroxy group-containing monomer as the comonomer. More preferably, it includes a carboxy group-containing monomer and a hydroxy group-containing monomer together. This may effectively increase the PSA's cohesive strength to enhance the adhesive properties. As the hydroxy group-containing monomer, the examples listed above and the like can be used. For instance, 2-hydroxyethyl (meth)acrylate, 4-hydroxybutyl (meth)acrylate and 6-hydroxyhexyl (meth)acrylate can be favorably used. Particularly preferable examples include 2-hydroxyethyl acrylate (HEA) and 4-hydroxybutyl acrylate (4HBA).

When a hydroxy group-containing monomer is used as the comonomer, its amount used can be, for instance, 0.01 % by weight or more of all monomers, also 0.1 % by weight or more, 0.3 % by weight or more, or even 0.7 % by weight or more thereof. In some embodiments, the amount of hydroxy group-containing monomer used can be 1.5 % by weight or more of all monomers, also 3 % by weight or more, or even 5 % by weight or more thereof. From the standpoint of readily obtaining adequate effect of the carboxy group-containing monomer used in combination, the amount of hydroxy group-containing monomer used can be, for instance, 10 % by weight or less of all monomers, also 7 % by weight or less, 4 % by weight or less, 2 % by weight or less, or even below 1 % by weight thereof, for instance, 0.8 % by weight or less.

In an embodiment where the monomer mixture includes a carboxy group-containing monomer and a hydroxy group-containing monomer together as comonomers, the carboxy group-containing monomer content ($W_{COOH}$) of the monomer mixture is preferably at least 0.5 times (by weight) the hydroxy group-containing monomer content ($W_{OH}$). In other words, it preferably satisfies $W_{COOH}/W_{OH} \geq 0.5$. This tends to favorably bring about the effect of the combined use of carboxy group-containing monomer and hydroxy group-containing monomer to increase the cohesive strength and enhance the adhesive properties. In some embodiments, $W_{COOH}/W_{OH}$ can be, for instance, 1.0 or greater, 2.5 or greater, 4.5 or greater, 7.0 or greater, or even 10 or greater. The maximum $W_{COOH}/W_{OH}$ ratio value is not particularly limited. It can be, for instance, 100 or less, 50 or less, or even 20 or less.

In some preferable embodiments, the monomers forming the acrylic polymer may include an N-vinyl cyclic amide as the comonomer. With the use of the N-vinyl cyclic amide, the PSA's cohesive strength and polarity can be adjusted to enhance its holding properties (e.g. heat-resistant holding properties, described later). Specific examples of the N-vinyl cyclic amide include N-vinyl-2-pyrrolidone, N-vinyl-2-piperidone, N-vinyl-3-morpholinone, N-vinyl-2-caprolactam, N-vinyl-1,3-oxazin-2-one, and N-vinyl-3,5-morpholinedione. N-vinyl-2-pyrrolidone and N-vinyl-2-caprolactam are particularly preferable. The amount of N-vinyl cyclic amide used is not particularly limited, but it is usually suitably 0.01 % by weight or more (preferably 0.1 % by weight or more, e.g. 0.5 % by weight or more) of all monomers. In some embodiments, the amount of N-vinyl cyclic amide used can be 1 % by weight or more of all monomers, also 5 % by weight or more, or even 7 % by weight or more thereof. From the standpoint of increasing the tack at room temperature (25 °C) or increasing the flexibility at low temperatures, the amount of N-vinyl cyclic amide used is usually suitably 40 % by weight or less of all monomers, possibly 30 % by weight or less, or even 20 % by weight or less thereof.

The art disclosed herein can be preferably implemented in an embodiment where the monomer mixture includes at least one species of polar group-containing monomer selected from the group consisting of a carboxy group-containing monomer, a hydroxy group-containing monomer and a monomer having a nitrogen atom-containing ring (or an N-hetero-ring containing monomer). The use of such a polar group-containing monomer can effectively increase the PSA's cohesive strength to enhance the holding properties. The polar group-containing monomer content in the monomer mixture is, for instance, possibly above 1 % by weight, preferably above 3 % by weight, also possibly above 5 % by weight, or even above 6 % by weight. In some embodiments, the polar group-containing monomer content can be 8 % by weight or higher, 10 % by weight or higher, 12 % by weight or higher, or even 16 % by weight or higher. On the other hand, from the standpoint of preventing the PSA from having an excessively high cohesive strength, the polar group-containing monomer content is usually suitably 40 % by weight or lower, preferably 30 % by weight or lower, possibly 25 % by weight or lower, or even 20 % by weight or lower.

The art disclosed herein can be preferably implemented, for instance, in an embodiment where the monomer mixture includes at least one species of polar group-containing monomer selected from the group consisting of carboxy group-containing monomers and N-hetero-ring containing monomers, with the polar group-containing monomer content being above 1 % by weight (preferably above 3 % by weight, possibly above 5 % by weight, above 6 % by weight, 8 % by weight or higher, 10 % by weight or higher, 12 % by weight or higher, or even 16 % by weight or higher). The amount of the at least one species of polar group-containing monomer selected from the group consisting of carboxy group-containing monomers and N-hetero-ring containing monomers is usually suitably 40 % by weight or less, preferably 30 % by weight or less, possibly 25 % by weight or less, or even 20 % by weight or less.

In an embodiment where the monomer mixture includes, as polar group-containing monomers, a carboxy group-containing monomer and an N-hetero-ring containing monomer together, there are no particular limitations to the relationship (by weight) between the N-hetero-ring containing monomer content ($W_N$) and the carboxy group-containing monomer content ($W_{COOH}$) in the monomer mixture. $W_N/W_{COOH}$ can be, for instance, 0.1 or greater, 0.2 or greater, 0.5 or greater, or even 1 or greater. In some preferable embodiments, $W_N/W_{COOH}$ can be greater than 1, for instance, 1.2 or greater, 1.5 or greater, 1.7 or greater, or even 2.0 or greater. $W_N/W_{COOH}$ can be, for instance, 50 or less, 30 or less, 20 or less, 10 or less, 5 or less, or even 3 or less.

While no particular limitations are imposed, the composition of the monomers forming the acrylic polymer is preferably designed so that the glass transition temperature (Tg, or the acrylic polymer's Tg hereinafter) is 0 °C or lower, determined by the Fox equation based on the monomer composition. From the standpoint of the PSA's adhesiveness, low-temperature properties, etc., the acrylic polymer's Tg is usually advantageously 0 °C or lower, preferably -20 °C or lower, more preferably -30 °C or lower, possibly -40 °C or lower, or even -50 °C or lower. From the standpoint of the PSA's cohesiveness, in some embodiments, the acrylic polymer's Tg is suitably -80 °C or higher, or possibly -70 °C or higher.

Here, in the present description, the glass transition temperature (Tg) of the acrylic polymer or an acrylic oligomer described later refers to the Tg value determined by the Fox equation based on the composition of monomers used for preparation of the polymer. As shown below, the Fox equation is a relational expression between the Tg of a copolymer and glass transition temperatures Tgi of homopolymers obtainable by homopolymerization of the respective monomers constituting the copolymer.

$$1/Tg = \Sigma(Wi/Tgi)$$

In the Fox equation, Tg represents the glass transition temperature (unit: K) of the copolymer, Wi the weight fraction (copolymerization ratio by weight) of a monomer i in the copolymer, and Tgi the glass transition temperature (unit: K) of homopolymer of the monomer i. When the polymer to be subjected to Tg determination is a homopolymer, the homopolymer's Tg equals to the polymer's Tg.

As for the glass transition temperatures of homopolymers used for Tg determination, values listed in a known document are used. In particular, values are given in "Polymer Handbook" (3rd edition, John Wiley & Sons, Inc., Year 1989). With respect to a monomer for which several values are given in Polymer Handbook, the highest value is used.

With respect to monomers for which no glass transition temperatures of the corresponding homopolymers are given in Polymer Handbook, values obtained by the measurement method described below are used.

In particular, to a reaction vessel equipped with a thermometer, a stirrer, a nitrogen inlet and a condenser, are added 100 parts by weight of monomer(s), 0.2 part by weight of 2,2'-azobisisobutyronitrile, and 200 parts by weight of ethyl acetate as a polymerization solvent, and the mixture is stirred for one hour under a nitrogen gas flow. After oxygen is removed in this way from the polymerization system, the mixture is heated to 63 °C and the reaction is carried out for 10 hours. Then, it is cooled to room temperature and a homopolymer solution having 33 % by weight solid content is obtained. Subsequently, this homopolymer solution is applied onto a release liner by flow coating and allowed to dry to prepare a test sample (a homopolymer sheet) of about 2 mm thickness. This test sample is cut out into a disc of 7.9 mm diameter and is placed between parallel plates; and while applying a shear strain at a frequency of 1 Hz using a rheometer (available from TA Instruments Japan, Inc.; model name ARES), the viscoelasticity is measured in the shear mode over a temperature range of -70 °C to 150 °C at a heating rate of 5 °C/min; and the temperature corresponding to the peak top temperature of the tan $\delta$ curve is taken as the homopolymer's Tg.

The method for obtaining the acrylic polymer is not particularly limited. A suitable method can be employed among various polymerization methods known as synthetic methods for acrylic polymers, such as solution polymerization, emulsion polymerization, bulk polymerization, suspension polymerization and photopolymerization. In some embodiments, solution polymerization can be preferably employed. In other embodiments, photopolymerization can be preferably used. In these polymerization methods, the embodiment of polymerization is not particularly limited. Choices can be suitably made with respect to heretofore known monomer supply methods, polymerization conditions (temperature, time, pressure, irradiation dose, radiation dose, etc.), amounts of materials (polymerization initiator, surfactant, etc.) used besides the monomers and so on.

For the polymerization, a polymerization initiator can be used in accordance with the polymerization method and the polymerization conditions. The polymerization initiator can be suitably selected among heretofore known thermal polymerization initiators, photopolymerization initiators, etc. For the polymerization initiator, solely one species or a combination of two or more species can be used.

Examples of thermal polymerization initiators include azo-based polymerization initiators (e.g. 2,2'-azobisisobutyronitrile, 2,2'-azobis-2-methylbutyronitrile, dimethyl 2,2'-azobis(2-methylpropionate), 4,4'-azobis-4-cyanovalerianic acid, azobis isovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate and 2,2'-azobis(N,N'-dimethyleneisobutylamidine) dihydrochloride; persulfates such as potassium persulfate; peroxide-based polymerization initiators (e.g. dibenzoyl peroxide, t-butyl permaleate, lauroyl peroxide, etc.); and redox-based polymerization initiators. The amount of thermal polymerization initiator used is not particularly limited. For instance, to 100 parts by weight of monomers used to prepare the acrylic polymer, the amount can be in the range between 0.01 part and 5 parts by weight, or preferably in the range between 0.05 part and 3 parts by weight.

The photopolymerization initiator is not particularly limited and examples thereof that may be used include benzoin ether-based photopolymerization initiators, acetophenone-based photopolymerization initiators, $\alpha$-ketol-based photopolymerization initiators, aromatic sulfonyl chloride-based photopolymerization initiators, photoactive oxime-based photopolymerization initiators, benzoin-based photopolymerization initiators, benzyl-based photopolymerization initiators, benzophenone-based photopolymerization initiators, ketal-based photopolymerization initiators, thioxanthone-based photopolymerization initiators, acylphosphine oxide-based photopolymerization initiators and the like. The amount of photopolymerization initiator used is not particularly limited, and may be, for example, in the range of 0.01 part by weight to 5 parts by weight and preferably 0.05 part by weight to 3 parts by weight relative to 100 parts by weight of monomers used for preparing the acrylic polymer.

In some embodiments, the PSA composition may include the acrylic polymer as a partial polymerization product obtained by subjecting the mixture comprising the monomers and polymerization initiator to UV irradiation to allow the monomers to undergo partial polymerization. The PSA composition comprising such a partial polymerization product can be applied to a certain article and subjected to UV irradiation to complete the polymerization. Such a partial polymerization product is a mixture of polymer derived from the monomers and unreacted monomers, typically in a syrup form (viscous liquid form). Hereinafter, the partial polymerization product in such a state may be referred to as a "monomer syrup" or simply "syrup." The monomer syrup-containing PSA composition (typically a UV curable PSA composition) can be prepared by, for instance, a method that includes a first stage where the monomers used to prepare the acrylic polymer are subjected to UV irradiation to obtain a partial polymerization product and a second stage where other materials (possibly a polyfunctional monomer, an acrylic oligomer, an additional photopolymerization initiator, etc.) used as necessary are added to and mixed with the partial polymerization product. Alternatively, it can also be prepared by a method that includes a first stage where some (possibly some portion or some species) of the monomers used to prepare the acrylic polymer is subjected to UV irradiation to obtain a partial polymerization product and a second stage where the remaining monomers and other materials used as necessary are added to and mixed with the partial polymerization product. The latter preparation method can be practiced in an embodiment where, for instance, of the monomers forming the acrylic polymer, some (possibly some portion or some species) or all of the polar group-containing monomer(s) are added in the second stage.

While no particular limitations are imposed, the acrylic polymer usually suitably has a weight average molecular weight (Mw) of about $5 \times 10^4$ or higher. With the acrylic polymer having such a Mw, the resulting PSA is likely to show good cohesiveness. In some embodiments, the acrylic polymer's Mw can be, for instance, $10 \times 10^4$ or higher, $20 \times 10^4$ or higher, or even $30 \times 10^4$ or higher. From the standpoint of the tightness of adhesion to adherend, the acrylic polymer's Mw is usually suitably about $500 \times 10^4$ or lower. The acrylic polymer's Mw can be determined based on polystyrene standards by gel permeation chromatography (GPC) analysis.

(Crosslinking agent)

The PSA composition disclosed herein can include a crosslinking agent as necessary. The crosslinking agent may contribute to an increase in cohesive strength of the PSA. The crosslinking agent can be selected among various crosslinking agents known in the field of PSA. Examples of the crosslinking agent include isocyanate-based crosslinking agent, epoxy-based crosslinking agent, oxazoline-based crosslinking agent, aziridine-based crosslinking agent, melamine-based crosslinking agent, peroxide-based crosslinking agent, urea-based crosslinking agent, metal alkoxide-based crosslinking agent, metal chelate-based crosslinking agent, metal salt-based crosslinking agent, 力 carbodiimide-based crosslinking agent, and amine-based crosslinking agent. As the crosslinking agent, solely one species or a combination of two or more species can be used.

When using a crosslinking agent, the amount used is not particularly limited. The crosslinking agent can be used, for instance, in an amount selected from the range between 0.001 part and 15 parts by weight to 100 parts by weight of acrylic polymer. From the standpoint of obtaining an increase in cohesive strength and tight adhesion to adherend in a well-balanced manner, the amount of crosslinking agent used to 100 parts by weight of acrylic polymer is usually preferably 12 parts by weight or less, possibly 8 parts by weight or less, or 6 parts by weight or less; it is suitably 0.005 part by weight or greater, or possibly 0.01 part by weight or greater.

In some embodiments, the crosslinking agent preferably comprises at least an isocyanate-based crosslinking agent. As the isocyanate-based crosslinking agent, solely one species or a combination of two or more species can be used. The isocyanate-based crosslinking agent can also be used in combination with other crosslinking agent(s), for instance, an epoxy-based crosslinking agent.

As the isocyanate-based crosslinking agent, a polyisocyanate-based crosslinking agent having at least two isocyanate groups per molecule is preferably used. The number of isocyanate groups per molecule of polyisocyanate-based crosslinking agent is preferably 2 to 10, for instance, 2 to 4, or typically 2 or 3. Examples of the polyisocyanate-based crosslinking agent include aromatic polyisocyanates such as tolylene diisocyanate and xylene diisocyanate; alicyclic isocyanates such as isophorone diisocyanate; and aliphatic polyisocyanates such as hexamethylene diisocyanate. More specific examples include lower aliphatic polyisocyanates such as butylene diisocyanate and hexamethylene diisocyanate; alicyclic polyisocyanates such as cyclopentylene diisocyanate, cyclohexylene diisocyanate and isophorone diisocyanate; aromatic diisocyanates such as 2,4-tolylene diisocyanate, 4,4' -diphenylmethane diisocyanate, xylylene diisocyanate and polymethylene polyphenyl isocyanate; isocyanate adducts such as trimethylolpropane-tolylene diisocyanate trimer adduct (product name CORONATE L available from Tosoh Corporation), a trimethylolpropane-hexamethylene diisocyanate trimer adduct (product name CORONATE HL available from Tosoh Corporation), and isocyanurate of hexamethylene diisocyanate (product name CORONATE HX available from Tosoh Corporation); polyisocyanates such as polyether polyisocyanate and polyester polyisocyanate; adducts of these polyisocyanates and various polyols; and polyisocyanates polyfunctionalized with isocyanurate bonds, biuret bonds, allophanate bonds, etc.

When using an isocyanate-based crosslinking agent, relative to 100 parts by weight of acrylic polymer, it can be used in an amount of, for instance, about 0.1 part by weight or greater, 0.5 part by weight or greater, 1.0 part by weight or greater, or even greater than 1.5 parts by weight. From the standpoint of obtaining greater effects of its use,

the amount of isocyanate-based crosslinking agent used to 100 parts by weight of acrylic polymer can be, for instance, greater than 2.0 parts by weight, 2.5 parts by weight or greater, or even 2.7 parts by weight or greater. The amount of isocyanate-based crosslinking agent used to 100 parts by weight of acrylic polymer is usually suitably 10 parts by weight or less, possibly 7 parts by weight or less, 5 parts by weight or less, or even 4 parts by weight or less. From the standpoint of avoiding reduced adhesiveness caused by excessive crosslinking, it may be advantageous to not use an excessive amount of isocyanate-based crosslinking agent.

As the epoxy-based crosslinking agent, a polyfunctional epoxy compound having at least two epoxy groups per molecule can be used. Examples include N,N,N',N'-tetraglycidyl-m-xylenediamine, diglycidylaniline, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, adipic acid diglycidyl ester, o-phthalic acid diglycidyl ester, triglycidyl-tris(2-hydroxyethyl) isocyanurate, resorcine diglycidyl ether, bisphenol-S-diglycidyl ether and an epoxy-based resin having at least two epoxy groups per molecule. Examples of commercial epoxy-based crosslinking agents include TETRAD C and TETRAD X available from Mitsubishi Gas Chemical, Inc.

When using an epoxy-based crosslinking agent, relative to 100 parts by weight of acrylic polymer, it can be used in an amount of, for instance, about 0.005 part by weight or greater; or from the standpoint of obtaining greater effects of its use, 0.01 part by weight or greater, 0.02 part by weight or greater, or even 0.05 part by weight or greater. The amount of epoxy-based crosslinking agent used to 100 parts by weight of acrylic polymer is usually suitably 2 parts by weight or less, possibly 1 part by weight or less, 0.5 part by weight or less, or even 0.2 part by weight or less. From the standpoint of avoiding a decrease in tightness of adhesion to adherend caused by excessive crosslinking, it may be advantageous to not use an excessive amount of epoxy-based crosslinking agent.

When using an isocyanate-based crosslinking agent and a different crosslinking agent (i.e. non-isocyanate-based crosslinking agent) together, the relative amounts of the isocyanate-based crosslinking agent and non-isocyanate-based crosslinking agent (e.g. an epoxy-based crosslinking agent) are not particularly limited. From the standpoint of favorably combining tight adhesion to adherend and cohesive strength, in some embodiments, the non-isocyanate-based crosslinking agent content can be, by weight, about 1/2 of the isocyanate-based crosslinking agent content or less, about 1/5 or less, about 1/10 or less, about 1/20 or less, or even about 1/30 or less. From the standpoint of favorably obtaining the effects of the combined use of isocyanate-based crosslinking agent and non-isocyanate-based crosslinking agent (e.g. an epoxy-based crosslinking agent), the non-isocyanate-based crosslinking agent content is usually suitably about 1/1000 of the isocyanate-based crosslinking agent content or greater, for instance, about 1/500 or greater.

To efficiently carry out the crosslinking reaction by an aforementioned crosslinking agent, a crosslinking catalyst can also be used. As the crosslinking catalyst, for instance, a tin-based catalyst can be preferably used such as dioctyltin dilaurate. The amount of crosslinking catalyst used is not particularly limited. For instance, to 100 parts by weight of acrylic polymer, it can be about 0.0001 part to 1 part by weight.

Another example of the crosslinking agent that can be used in the PSA layer of the PSA sheet disclosed herein is a monomer having two or more polymerizable functional groups per molecule, that is, a polyfunctional monomer. Examples of the polyfunctional monomer include ethylene glycol di(meth)acrylate, propylene glycol di(meth)acrylate, polyethylene glycol di(meth)acrylate, polypropylene glycol di(meth)acrylate, neopentyl glycol di(meth)acrylate, pentaerythritol di(meth)acrylate, pentaerythritol tri(meth)acrylate, dipentaerythritol hexa(meth)acrylate, ethyleneglycol di(meth)acrylate, 1,6-hexanediol di(meth)acrylate, 1,12-dodecanediol di(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, urethane acrylate, butanediol (meth)acrylate and hexanediol (meth)acrylate. In some embodiments, a polyfunctional monomer having three or more polymerizable functional groups per molecule can be used to effectively increase the PSA's cohesive strength. Non-limiting examples of such a polyfunctional monomer include trimethylolpropane triacrylate (TMPTA) and dipentaerythritol hexaacrylate (DPHA).

When using a polyfunctional monomer as the crosslinking agent, its amount used may depend on its structure, the number of functional groups therein, etc. It is usually suitably in a range of about 0.01 part to 3.0 parts by weight to 100 parts by weight of the monomers. In some embodiments, from the standpoint of obtaining greater effects, the amount of polyfunctional monomer used to 100 parts by weight of the monomers can be, for instance, 0.02 part by weight or greater, or even 0.03 part by weight or greater. On the other hand, from the standpoint of avoiding a decrease in tack caused by an excessive increase in cohesive strength, the amount of polyfunctional monomer used to 100 parts by weight of the monomers can be 2.0 parts by weight or less, 1.0 part by weight or less, or even 0.5 part by weight or less. In some embodiments, the polyfunctional monomer can be used in an amount of 0.3 part by weight or less, 0.2 part by weight or less, or even 0.1 part by weight or less. The polyfunctional monomer can be preferably used in such an amount when using, for instance, a polyfunctional monomer having three or more polymerizable functional groups per molecule.

(Tackifier)

The PSA composition disclosed herein can include a tackifier (typically a tackifier resin) as necessary. The tackifier may be useful in enhancing the adhesive properties (e.g. peel strength). The tackifier is not particularly limited. For instance, various tackifier resins can be used, such as rosin-based tackifier resins, terpene-based tackifier resins, hydrocarbon-based tackifier resins and phenolic tackifier resins. These tackifiers can be used singly as one species or in a combination of two or more species.

Specific examples of the rosin-based tackifier resin include unmodified rosins (raw rosins) such as gum rosin, wood rosin and tall-oil rosin; modified rosins (hydrogenated rosins, disproportionated rosins, polymerized rosins, other chemically-modified rosins, etc.) obtainable by subjecting these unmodified rosins to modifications such as hydrogenation, disproportionation and polymerization; and various other rosin derivatives. Examples of the rosin derivatives include rosin esters such as rosin esters obtainable by esterifying unmodified rosins with alcohols (i.e. esterified rosins) and modified rosin esters obtainable by esterifying modified rosins (hydrogenated rosins, disproportionated rosins, polymerized rosins, etc.) with alcohols (i.e. esterified modified rosins); unsaturated fatty acid-modified rosins obtainable by modifying unmodified rosins or modified rosins (hydrogenated rosins, disproportionated rosins, polymerized rosins, etc.) with unsaturated fatty acids; unsaturated fatty acid-modified rosin esters obtainable by modifying rosin esters with unsaturated fatty acids; rosin alcohols obtainable by reduction of carboxy groups in unmodified rosins, modified rosins (hydrogenated rosins, disproportionated rosins, polymerized rosins, etc.), unsaturated fatty acid-modified rosins, or unsaturated fatty acid-modified rosin esters; metal salts of rosins such as unmodified rosins, modified rosins and various rosin derivatives (especially rosin esters); and rosin phenol resins obtainable by subjecting rosins (hydrogenated rosins, disproportionated rosins, polymerized rosins, etc.) to acid-catalyzed phenol addition followed by thermal polymerization.

Examples of the terpene-based tackifier resin include terpene-based resins such as $\alpha$-pinene polymers, $\beta$-pinene polymers and dipentene polymers; and modified terpene-based resins obtainable by subjecting these terpene-based resins to modifications (phenol modification, aromatic modification, hydrogenation, hydrocarbon modification, etc.). Examples of the modified terpene resin include terpene phenol-based resins, styrene modified terpene-based resins, aromatic modified terpene-based resins and hydrogenated terpene-based resins.

Examples of the hydrocarbon-based tackifier resin include various hydrocarbon resins such as aliphatic hydrocarbon resins, aromatic hydrocarbon resins, aliphatic cyclic hydrocarbon resins, aliphatic/aromatic petroleum resins (styrene-olefin copolymers and the like), aliphatic/alicyclic petroleum resins, hydrogenated hydrocarbon resin, coumarone resins, and coumarone indene resins.

Examples of the aliphatic hydrocarbon resins include polymers of one, two or more species of aliphatic hydrocarbons selected among olefins and dienes having about 4 to 5 carbon atoms. Examples of the olefin include 1-butene, isobutylene and 1-pentene. Examples of the diene include butadiene, 1,3-pentadiene and isoprene.

Examples of the aromatic hydrocarbon resins include polymers of vinyl-group-containing aromatic hydrocarbons (styrene, vinyl toluene, $\alpha$-methyl styrene, indene, methyl indene, etc.) having 8 to 10 carbon atoms. Examples of the alicyclic hydrocarbon resins include alicyclic hydrocarbon-based resins obtainable by polymerization of cyclic dimers of so-called "C4 petroleum fractions" and "C5 petroleum fractions"; polymers of cyclic diene compounds (cyclopentadiene, dicyclopentadiene, ethylidene norbornene, dipentene, etc.) or hydrogenation products of these polymers; and alicyclic hydrocarbon-based resins obtainable by hydrogenation of aromatic rings in aromatic hydrocarbon resins or aliphatic-aromatic petroleum resins.

When the PSA layer disclosed herein includes a tackifier, from the standpoint of increasing the biomass carbon ratio of the PSA, it is preferable to use a tackifier derived from a plant (i.e. a plant-based tackifier) as the tackifier. Examples of the plant-based tackifier may include the aforementioned rosin-based tackifier resins and terpene-based tackifier resins. The plant-based tackifiers can be used singly as one species or in a combination of two or more species. When the PSA layer disclosed herein includes a tackifier, the ratio of plant-based tackifier to the total amount of tackifier is preferably 30 % by weight or higher (e.g. 50 % by weight or higher, typically 80 % by weight or higher). In a particularly preferable embodiment, the ratio of plant-based tackifier to the total amount of tackifier is 90 % by weight or higher (e.g. 95 % by weight or higher, typically 99 % to 100 % by weight). The art disclosed herein can be preferably implemented in an embodiment using essentially no non-biomass-derived tackifier such as a petroleum resin and a petroleum-derived hydrocarbon resin. Here, using essentially no particular tackifier means that the tackifier is not used at least intentionally and typically that the tackifier content is less than 3 % by weight of the PSA, or more preferably less than 1 % by weight. It is particularly preferable to use essentially no non-plant-based tackifier.

As the tackifier, it is preferable to use a species in which at least 50 % of all carbons in the tackifier are biomass-derived carbons. In other words, a preferable tackifier has a biomass carbon ratio of 50 % or higher. Such a tackifier is preferable because it will not lower the PSA's biomass carbon ratio to below 50 %, regardless of the amount used. The tackifier's biomass carbon ratio can be 60 % or higher, 70 % or higher, or even 80 % or higher. A tackifier having a biomass carbon ratio of 100 % can be used as well. When using two or more species of tackifier, it is preferable that, of the combined amount, at least 50 % by weight (more preferably at least 70 % by weight, yet more preferably at least

85 % by weight) is attributed to a tackifier resin having a biomass carbon ratio of 50 % or higher (more preferably 60 % or higher, yet more preferably 70 % or higher, e.g. 80 % or higher). The art disclosed herein can be preferably implemented in an embodiment using only tackifier(s) having biomass carbon ratios of 50 % or higher.

In the art disclosed herein, it is preferable to use a tackifier having a softening point (softening temperature) of about 60 °C or higher (preferably about 80 °C or higher, more preferably about 95 °C or higher, e.g. about 105 °C or higher). Such a tackifier can bring about a PSA sheet having superior properties. The maximum softening point of the tackifier is not particularly limited. In some embodiments, from the standpoint of the miscibility, etc., the tackifier can have a softening point of about 200 °C or lower, about 180 °C or lower, about 140 °C or lower, or even about 120 °C or lower. The softening point of tackifier referred to herein is defined as the value measured by the softening point test method (ring and ball method) specified either in JIS K5902:2006 or in JIS K2207:2006.

The amount of tackifier used is not particularly limited. It can be suitably selected in accordance with desired adhesive properties (peel strength, etc.). In some embodiments, the amount of tackifier used to 100 parts by weight of acrylic polymer can be, for instance, 5 parts by weight or greater, usually suitably 10 parts by weight or greater, possibly 15 parts by weight or greater, 20 parts by weight or greater, or even 25 parts by weight or greater. In view of the balance among adhesive properties, in some embodiments, the amount of tackifier resin used to 100 parts by weight of acrylic polymer can be, for instance, 100 parts by weight or less, usually suitably 70 parts by weight or less, preferably 50 parts by weight or less, possibly 40 parts by weight or less, or even 35 parts by weight or less. The art disclosed herein can be preferably implemented in an embodiment using essentially no tackifier as well.

(Acrylic oligomer)

The PSA composition disclosed herein may include an acrylic oligomer as necessary. The acrylic oligomer may contribute to an increase in cohesive strength or an increase in peel strength of the PSA. The acrylic oligomer can be preferably used, for instance, in a UV curable PSA composition.

The weight average molecular weight (Mw) of the acrylic oligomer can be typically about 1000 or higher below about 30000, preferably about 1500 or higher below about 10000, or yet more preferably about 2000 or higher below about 5000. Having a Mw in these ranges, it is likely to suitably produce the effect to enhance the cohesiveness and the adhesion to the adjacent surface. The acrylic oligomer's Mw can be determined based on standard polystyrene by gel permeation chromatography (GPC).

Examples of the monomers used for forming the acrylic oligomer include (meth)acrylate monomers such as the aforementioned various $C_{1-36}$ alkyl (meth)acrylates (preferably $C_{1-20}$ alkyl (meth)acrylates); the aforementioned various alicyclic hydrocarbon group-containing (meth)acrylates; the aforementioned various aromatic hydrocarbon group-containing (meth)acrylates; and (meth)acrylates obtainable from alcohols derived from terpene compounds. These can be used solely as one species or in a combination of two or more species.

From the standpoint of enhancing the adhesion, the acrylic oligomer preferably comprises, as a monomeric unit, an acrylic monomer having a relatively bulky structure, typified by an alkyl (meth)acrylate whose alkyl group has a branched structure, such as isobutyl (meth)acrylate and t-butyl (meth)acrylate; an alicyclic hydrocarbon group-containing (meth)acrylate as well as an aromatic hydrocarbon group-containing (meth)acrylate; and the like. When UV is used for synthesizing the acrylic oligomer or for forming the PSA layer, in view of the unlikelihood of causing inhibition of polymerization, a monomer having a saturated hydrocarbon group at the ester terminus is preferable. For instance, an alkyl (meth)acrylate whose alkyl group has a branched structure and a saturated alicyclic hydrocarbon group-containing (meth)acrylate can be favorably used.

The (meth)acrylate monomer content of all monomers forming the acrylic oligomer is typically above 50 % by weight, preferably 60 % by weight or higher, or more preferably 70 % by weight or higher (e.g. 80 % by weight or higher, or even 90 % by weight or higher). In a preferable embodiment, the acrylic oligomer has a monomer composition essentially consisting of one, two or more species of (meth)acrylate monomer. When the monomer mixture includes an alicyclic hydrocarbon group-containing (meth)acrylate and a $C_{1-20}$ alkyl (meth)acrylate, their weight ratio is not particularly limited. For instance, it can be in the range between 10/90 and 90/10, in the range between 20/80 and 80/20, or in the range between 30/70 and 70/30.

As the monomers forming the acrylic oligomer, in addition to the (meth)acrylate monomers, a functional group-containing monomer can be used as necessary. Examples of the functional group-containing monomer include N-hetero-ring containing monomers such as N-vinyl-2-pyrrolidone and N-acryloylmorpholine; amino group-containing monomers such as N,N-dimethylaminoethyl (meth)acrylate; amide group-containing monomers such as N,N-diethyl(meth)acrylamide; carboxy group-containing monomers such as AA and MAA; and hydroxy group-containing monomers such as 2-hydroxyethyl (meth)acrylate. These functional group-containing monomers can be used solely as one species or in a combination of two or more species. When a functional group-containing monomer is used, the functional group-containing monomer content in all monomers forming the acrylic oligomer can be, for instance, 1 % by weight or higher, 2 % by weight or higher, or even 3 % by weight or higher; and it can be, for instance, 15 % by weight or lower, 10 % by

weight or lower, or even 7 % by weight or lower.

While no particular limitations are imposed, the composition of monomers forming the acrylic oligomer is preferably designed so that the glass transition temperature (Tg, or the acrylic oligomer's Tg hereinafter) is in the range of 10 °C or higher and 300 °C or lower, determined by the Fox equation based on the monomer composition. The acrylic oligomer's Tg can be, for instance, about 30 °C or higher, about 40 °C or higher, about 60 °C or higher, about 80 °C or higher, or even about 100 °C or higher. With increasing Tg of the acrylic oligomer, the effect to increase the cohesive strength tends to improve in general. From the standpoint of the tightness of adhesion to adherend, the miscibility to the acrylic polymer, etc., the acrylic oligomer's Tg can be, for instance, about 250 °C or lower, about 200 °C or lower, about 180 °C or lower, or even about 150 °C or lower.

Examples of favorable acrylic oligomers include various homopolymers such as dicyclopentanyl methacrylate (DCPMA), cyclohexyl methacrylate (CHMA), isobornyl methacrylate (IBXMA), isobornyl acrylate (IBXA), dicyclopentanyl acrylate (DCPA), 1-adamantyl methacrylate (ADMA) and 1-adamantyl acrylate (ADA); as well as DCPMA-MMA copolymer, DCPMA-IBXMA copolymer, ADA-methyl methacrylate (MMA) copolymer, CHMA-isobutyl methacrylate (IBMA) copolymer, CHMA-IBXMA copolymer, CHMA-acryloylmorpholine (ACMO) copolymer, and CHMA-diethylacrylamide (DEAA) copolymer, CHMA-AA copolymer, and the like.

The acrylic oligomer can be formed by polymerization of a prescribed monomer mixture. The polymerization method and polymerization conditions are not particularly limited. Various heretofore known polymerization methods (e.g. solution polymerization, emulsion polymerization, bulk polymerization, photopolymerization, radiation polymerization, etc.) can be employed under appropriate conditions. The types of polymerization initiator (e.g. azo-based polymerization initiator) that can be used as necessary are generally comparable to the examples cited in regard to the synthesis of acrylic polymer. As the polymerization initiator and an optional chain transfer agent (e.g. mercaptans) can be used in amounts suitably selected based on technical common knowledge to obtain a desirable molecular weight, further details are omitted.

When the PSA includes an acrylic oligomer, its amount included relative to 100 parts by weight of the acrylic polymer can be, for instance, 0.01 part by weight or greater. From the standpoint of obtaining greater effect, it can be 0.05 part by weight or greater, 0.1 part by weight or greater, or even 0.2 part by weight or greater. From the standpoint of the miscibility to the acrylic polymer, etc., the acrylic oligomer content is usually suitably below 50 parts by weight, preferably below 30 parts by weight, more preferably 25 parts by weight or less, possibly 10 parts by weight or less, 5 parts by weight or less, or even 1 part by weight or less.

(Other components)

Th PSA composition disclosed herein may include various additives generally known in the field of PSA compositions as necessary, such as a leveling agent, plasticizer, filler, colorant (pigment, dye, etc.), antistatic agent, anti-aging agent, UV absorber, antioxidant and photo-stabilizer. As for these various additives, heretofore known species can be used by typical methods.

<PSA sheet>

The present description provides a PSA sheet having a PSA layer formed from a PSA composition disclosed herein. The PSA sheet may be, for instance, a substrate-free double-faced PSA sheet having a first adhesive face formed of one surface of the PSA layer and a second adhesive face formed of the other surface of the PSA layer. Alternatively, the PSA sheet disclosed herein may be a substrate-supported PSA sheet in which the PSA layer is layered on one or each face of a support substrate. Hereinafter, the support substrate may be simply referred to as a "substrate."

Fig. 1 schematically illustrates the structure of the PSA sheet according to an embodiment. PSA sheet 1 is configured as a substrate-free double-faced PSA sheet formed of a PSA layer 21. PSA sheet 1 is used by applying the first adhesive face 21A formed of one surface (first face) of PSA layer 21 and the second adhesive face 21B formed of the other surface (second face) of PSA layer 21 to different locations of adherend(s). The locations to which the adhesive faces 21A and 21B are applied can be the corresponding locations of different members or different locations of a single member. As shown in Fig. 1, PSA sheet 1 prior to use (i.e. before applied to an adherend) may be a constituent of a release-linered PSA sheet 100 in which the first and second adhesive faces 21A and 21B are protected by release liners 31 and 32 each having a release face at least on the side facing the PSA layer 21. The release liners 31 and 32 which may be preferably used are, for example, those respectively having a release layer provided by treatment with a release agent on one side of a sheet-shaped substrate (liner substrate) so that the side serves as a release surface. Alternatively, omitting release liner 32, a release liner 31 having release faces on both sides may be used; this and the PSA sheet 1 may be layered and wound together to form a roll of a release-linered PSA sheet in which the second adhesive face 21B is abutted and protected by the backside of release liner 31.

Fig. 2 schematically illustrates the structure of a PSA sheet according to another embodiment. The PSA sheet

2 is configured as a single-faced PSA sheet with a substrate, including a support substrate sheet (such as a resin film) 10 having a first surface 10A and a second surface 10B, and a PSA layer 21 provided on the side of the first surface 10A. The PSA layer 21 is provided securely on the side of the first surface 10A of the support substrate 10, namely provided without intending to separate the PSA layer 21 from the support substrate 10. As shown in Fig. 2, PSA sheet 2 prior to use may be a constituent of a release-linered PSA sheet 200 in which the surface (adhesive face) 21A of the PSA layer 21 is protected by release liner 31 having a release surface at least on the side facing the PSA layer 21. Alternatively, omitting release liner 31, a support substrate 10 having a second surface 10B that serves as a release surface may be used and PSA sheet 2 may be wound to form a roll in which the adhesive face 21A is abutted and protected by the second face (backside) 10B of support substrate 10.

Fig. 3 schematically illustrates the structure of the PSA sheet according to yet another embodiment. PSA sheet 3 is configured as a substrate-supported double-faced PSA sheet comprising a support substrate sheet (e.g. resin film) 10 having first and second faces 10A and 10B, a first PSA layer 21 fixed to the first face 10A side and a second PSA layer 22 fixed to the second face 10B side. As shown in Fig. 3, PSA sheet 3 prior to use may be a constituent of a release-linered PSA sheet 300 in which the surfaces (first and second adhesive faces) 21A and 22A of PSA layer 21 are protected by release liners 31 and 32. Alternatively, omitting release liner 32, a release liner 31 having release faces on both sides may be used; this and the PSA sheet 3 may be layered and wound together to form a roll of a release-linered PSA sheet in which the second adhesive face 22A is abutted and protected by the backside of release liner 31.

As the release liner, it is possible to use a release liner having a release layer on the surface of a liner substrate such as resin film and paper or a release liner formed from a low-adhesive material such as a polyolefinic resin (e.g. polyethylene, polypropylene) and a fluororesin. The release layer can be formed by subjecting the liner substrate to surface treatment with a release agent such as a silicone-based, long-chain alkyl-based, fluorine-based agent, and molybdenum sulfide. As the liner substrate, similar to the substrate of a PSA sheet described later, it is preferable to use a liner substrate having a high biomass carbon ratio.

The concept of PSA sheet herein encompasses so-called PSA tape, PSA film, PSA labels and the like. The PSA sheet disclosed herein may be in a roll form or in a flat sheet form. The PSA sheet may be further processed into various shapes.

The PSA layer disclosed herein can be formed from a PSA composition by a heretofore known method. For instance, with respect to a substrate-free double-faced PSA sheet, a PSA sheet can be formed by applying a PSA composition to a releasable surface (release face) and allowing the PSA composition to cure to form a PSA layer on the surface. As for a substrate-supported PSA sheet, it is preferable to employ a method (direct method) for forming a PSA layer where a PSA composition is directly provided (typically applied) to the substrate and allowed to cure. Alternatively, it is also possible to employ a method (transfer method) where a PSA composition is provided to a releasable surface (release face) and allowed to cure to form a PSA layer on the surface and the resulting PSA layer is transferred to a substrate. As the release face, the surface of a release liner, the substrate's backside that has been treated with release agent, or the like can be used. The PSA composition can be cured by subjecting the PSA composition to a curing process such as drying, crosslinking, polymerization, cooling, etc. Two or more different curing processes can be carried out at the same time or stepwise. The PSA layer disclosed herein is not limited to, but is typically formed in a continuous form. For instance, the PSA layer may be formed in a regular or random pattern of dots, stripes, etc.

The PSA composition can be applied, using a heretofore known coater, for instance, a gravure roll coater, reverse roll coater, kiss roll coater, dip roll coater, die coater, bar coater, knife coater and spray coater. Alternatively, the PSA composition can be applied by immersion, curtain coating, etc.

From the standpoints of accelerating the crosslinking reaction, improving production efficiency, and the like, it is preferable to dry the PSA composition under heating. The drying temperature can be, for example, about 40 °C to 150 °C, and usually temperature of about 60 °C to 130 °C is preferable. After drying the PSA composition, aging may be implemented for purposes such as adjusting the distribution or migration of components in the PSA layer, advancing the crosslinking reaction, and lessening possible strain in the substrate and the PSA layer.

The thickness of the PSA layer is not particularly limited and can be suitably selected in accordance with the purpose. In view of the balance between adhesion to adherend and cohesiveness, the thickness of the PSA layer can be, for instance, about 2 μm to 500 μm. From the standpoint of the adhesion to adherend, the thickness of the PSA layer is usually suitably 3 μm or greater, preferably 5 μm or greater, possibly 10 μm or greater, 15 μm or greater, 20 μm or greater, or even 25 μm or greater. From the standpoint of making the PSA sheet thinner, the thickness of the PSA layer can be, for instance, 200 μm or less, 150 μm or less, or 100 μm or less. When the PSA sheet disclosed herein is a double-faced PSA sheet having a PSA layer on each face of a substrate, the respective PSA layers may have the same thickness or different thicknesses.

(Substrate)

The PSA sheet disclosed herein may be in a substrate-supported PSA sheet form having a PSA layer on one

or each face of a substrate. The material of the substrate is not particularly limited and can be suitably selected in accordance with the purpose and application of the PSA sheet. Non-limiting examples of usable substrates include resin films; rubber sheets; foam sheets; woven and nonwoven fabrics of single or blended spinning of various fibrous materials (which may be natural fibers such as hemp and cotton, synthetic fibers such as polyester and vinylon, semi-synthetic fibers such as acetate, etc.); papers such as Japanese paper, high-quality paper, Kraft paper and crepe paper; and metal foil such as aluminum foil and copper foil. The substrate may be a composite of these materials.

For use in electronic devices, it is preferable to use a substrate that is less likely to form dust (e.g. fine fibers or particles such as paper dust). When the PSA sheet disclosed herein is used in the field of electronic devices, a preferable substrate is free of fibrous substances such as paper and fabrics. For instance, it is preferable to use resin film, a rubber sheet, a foam sheet, metal foil, a composite of these or the like.

Examples of the resin film include polyester films such as polyethylene terephthalate (PET) and polyethylene naphthalate; polyolefin films such as polyethylene (PE), polypropylene (PP), ethylene-propylene copolymer, and ethylene-butene copolymer; vinyl chloride resin film; vinylidene chloride resin film; vinyl acetate resin film; polystyrene film; polyacetal film; polyimide film; polyamide film; fluororesin film; and cellophane. Examples of the rubber sheet include a natural rubber sheet and a butyl rubber sheet. Examples of the foam sheet include a polyurethane foam sheet and a polyolefin foam sheet. Examples of the metal foil include aluminum foil and copper foil. Among them, resin films are preferable from the standpoint of the size stability, thickness precision, cost, ease of processing, tensile strength, etc. As used herein, the "resin film" typically refers to a non-porous film and is conceptually distinct from so-called non-woven and woven fabrics.

In some embodiments, from the standpoint of the strength and the ease of processing, polyester film is preferably used as the substrate. As the polyester resin forming the polyester film, in typical, a polyester resin whose primary component is a polyester obtainable by polycondensation of a dicarboxylic acid and a diol is used.

Examples of the dicarboxylic acid forming the polyester include aromatic dicarboxylic acids such as phthalic acid, isophthalic acid, terephthalic acid, 2-methylterephthalic acid, 5-sulfoisophthalic acid, 4,4'-diphenyldicarboxylic acid, 4,4'-diphenyl ether dicarboxylic acid, 4,4'-diphenyl ketone dicarboxylic acid, 4,4'-diphenoxyethane dicarboxylic acid, 4,4-diphenylsulfone dicarboxylic acid, 1,4-naphthalene dicarboxylic acid, 1,5-naphthalene dicarboxylic acid, 2,6-naphthalene dicarboxylic acid and 2,7-naphthalene dicarboxylic acid; alicyclic dicarboxylic acids such as 1,2-cyclohexane dicarboxylic acid, 1,3-cyclohexane dicarboxylic acid, and 1,4-cyclohexane dicarboxylic acid; aliphatic dicarboxylic acids such as malonic acid, succinic acid, glutaric acid, adipic acid, pimelic acid, suberic acid, azelaic acid, sebacic acid, and dodecanoic acid; unsaturated dicarboxylic acids such as maleic acid, maleic anhydride, and fumaric acid; and derivatives of these (e.g. lower alkyl esters of the dicarboxylic acids such as terephthalic acid, etc.). These can be used singly as one species or in a combination of two or more species.

Examples of the diol forming the polyester include aliphatic diols such as ethylene glycol, diethylene glycol, polyethylene glycol, propylene glycol, polypropylene glycol, 1,3-propanediol, 1,5-pentanediol, neopentyl glycol, 1,4-butanediol, 1,6-hexanediol, 1,8-octanediol, and polyoxytetramethylene glycol; alicyclic diols such as 1,2-cyclohexanediol, 1,4-cyclohexanediol, 1,1-cyclohexanedimethylol, and 1,4-cyclohexanedimethylol; and aromatic diols such as xylylene glycol, 4,4'-dihydroxybiphenyl, 2,2-bis(4'-hydroxyphenyl)propane, and bis(4-hydroxyphenyl)sulfone. These can be used singly as one species or in a combination of two or more species. From the standpoint of the transparency, etc., aliphatic diols are preferable and ethylene glycol is particularly preferable. The ratio of the aliphatic diol (preferably ethylene glycol) in the diol forming the polyester is preferably 50 % by weight or higher (e.g. 80 % by weight or higher, typically 95 % by weight or higher). The diol may essentially consist of ethylene glycol. As the ethylene glycol, it is preferable to use biomass-derived ethylene glycol (typically biomass ethylene glycol obtained from biomass ethanol as the starting material). For instance, of the ethylene glycol forming the polyester, the ratio of biomass-derived ethylene glycol can be, for instance, 50 % by weight or higher, preferably 75 % by weight or higher, possibly 90 % by weight or higher, or even 95 % by weight or higher. Essentially all of the ethylene glycol can be biomass-derived ethylene glycol.

Examples of the polyester resin film include polyethylene terephthalate (PET) film, polybutylene terephthalate (PBT) film, and polyethylene naphthalate (PEN) film.

When the substrate disclosed herein is a polyester film substrate, the polyester film substrate may include a non-polyester polymer in addition to the polyester. Favorable examples of the non-polyester polymer include those that are not polyester among the various polymer materials exemplified earlier as the resin film possibly forming the substrate. When the polyester film substrate disclosed herein includes a non-polyester polymer, the non-polyester polymer content is suitably less than 100 parts by weight to 100 parts by weight of polyester, preferably 50 parts by weight or less, more preferably 30 parts by weight or less, or yet more preferably 10 parts by weight or less. The non-polyester polymer content relative to 100 parts by weight of polyester can be 5 parts by weight or less, or even 1 part by weight or less. The art disclosed herein can be preferably implemented in an embodiment where, for instance, the polyester film substrate is 99.5 % to 100 % polyester by weight.

In some other embodiments, from the standpoint of the strength and flexibility, a polyolefin film can be preferably used as the substrate. The polyolefin film comprises, as the primary component, a polymer whose primary monomer

(the primary component among the monomers) is an α-olefin. The ratio of the polymer is usually 50 % by weight or higher (e.g. 80 % by weight or higher, typically 90 % to 100 % by weight). Specific examples of the polyolefin include a species whose primary monomer is ethylene (i.e. polyethylene) and a species whose primary monomer is propylene (i.e. polypropylene). The polyethylene can be ethylene homopolymer, a copolymer of ethylene and other olefin(s) (e.g. one, two or more species selected among α-olefins with 3 to 10 carbon atoms), or a copolymer of ethylene and non-olefin monomer(s) (e.g. one, two or more species selected among ethylenically unsaturated monomers such as vinyl acetate, acrylic acid, methacrylic acid, methyl acrylate and ethyl acrylate). The polypropylene can be propylene homopolymer, a copolymer of propylene and other olefin(s) (e.g. one, two or more species selected among α-olefins with 2 or 4 to 10 carbon atoms), or a copolymer of propylene and non-olefin monomer(s). The substrate disclosed herein may consist of one species of polyolefin among these or may include two or more species of polyolefin.

When the substrate disclosed herein is a polyolefin film substrate, the polyolefin film substrate may include a non-polyolefin polymer in addition to the polyolefin(s). Favorable examples of the non-polyolefin polymer include those that are not polyolefins among the various polymer materials exemplified earlier as the resin film possibly forming the substrate. When the polyolefin film substrate disclosed herein includes a non-polyolefin polymer, the non-polyolefin polymer content is suitably less than 100 parts by weight to 100 parts by weight of polyolefin, preferably 50 parts by weight or less, more preferably 30 parts by weight or less, or yet more preferably 10 parts by weight or less. The non-polyolefin polymer content relative to 100 parts by weight of polyolefin can be 5 parts by weight or less, or even 1 part by weight or less. The art disclosed herein can be preferably implemented in an embodiment where, for instance, the polyolefin film substrate is 99.5 % to 100 % polyolefin by weight.

From the standpoint of reducing the usage of fossil-resource-based materials, the substrate disclosed herein preferably comprises a biomass material. The biomass material possibly forming the substrate is not particularly limited. Examples include biomass polyesters such as biomass PET and biomass polytrimethylene terephthalate (biomass PTT); polylactic acid; biomass polyolefins such as biomass polyethylenes including biomass high density polyethylene (biomass HDPE), biomass low density polyethylene (biomass LDPE) and biomass linear low density polyethylene (biomass LLDPE) as well as biomass polypropylene (biomass PP); biomass poly(3-hydroxybutyrate-co-3-hydroxyhexanoate); biomass polyamides such as polyhexamethylene sebacamide and poly(xylene sebacamide); biomass polyurethanes such as biomass polyester ether urethane and biomass polyether urethane; and cellulose-based resins. Among these, solely one species or a combination of two or more species can be used. In particular, biomass PET, biomass PTT, biomass HDPE, biomass LDPE, biomass LLDPE and biomass PP are preferable. Biomass PET is especially preferable. These biomass materials are resin materials and thus can be preferably used in an embodiment where the substrate is a resin film. With the use of the biomass material, the usage of fossil-resource-based materials can be reduced in the PSA sheet using the resin film (preferably a polyolefin film) as the substrate.

In the PSA sheet in an embodiment having a substrate, the biomass carbon ratio of the substrate is preferably 20 % or higher, or more preferably 35 % or higher. When the reduction of usage of fossil-resource-based materials is of greater importance, the biomass carbon ratio of the substrate can be, for instance, 50 % or higher, 70 % or higher, 85 % or higher, or even 90 % or higher. While the maximum biomass carbon ratio is 100 % or lower, in some embodiments, in view of the ease of processing, strength, etc., the biomass carbon ratio of the substrate can be, for instance, 80 % or lower, 60 % or lower, 40 % or lower, or even below 20 %. Here, similar to the biomass carbon ratio of the PSA, the biomass carbon ratio of the substrate refers to the ratio of biomass-derived carbons in the total carbon content of the substrate. The biomass carbon ratio of the substrate can be estimated from the carbon- 14 isotope content determined based on ASTM D6866. The same applies to the biomass carbon ratio of the PSA sheet described later.

The face of the substrate (e.g. resin film, a rubber sheet, a foam sheet, etc.) on which the PSA layer is placed (i.e. the PSA layer side surface) may be subjected to a known or common surface treatment such as corona discharge treatment, plasma treatment, UV irradiation, acid treatment, base treatment and formation of a primer layer. Such surface treatment may be carried out to increase the tightness of adhesion between the substrate and the PSA layer, that is, the anchoring of the PSA layer to the substrate. Alternatively, the substrate may be free of any surface treatment to enhance the anchoring of the PSA layer-side surface. When forming a primer layer, the primer used for the formation is not particularly limited and a suitable species can be selected among known primers. The thickness of the primer layer is not particularly limited. For instance, it can be above 0.00 μm; and it is usually suitably 0.1 μm or greater. From the standpoint of obtaining greater effects, it can also be 0.2 μm or greater. The thickness of the primer layer is preferably less than 1.0 μm, or possibly 0.7 μm or less, or even 0.5 μm or less. In general, primers are heavily dependent on fossil-resource-based materials; and therefore, from the standpoint of increasing the biomass carbon ratio of the PSA sheet described later, it may be advantageous that the primer layer does not have an excessively large thickness.

In a single-faced PSA sheet having a PSA layer on one face of the substrate, the PSA layer-free face (backside) of the substrate may be subjected to release treatment with a release agent (backside treatment agent). The backside treatment agent possibly used for formation of the backside treatment layer is not particularly limited. It is possible to use silicone-based backside treatment agents, fluorine-based backside treatment agents, long-chain alkyl-based backside treatment agents and other known or common agents in accordance with the purpose and application. For the

backside treatment agent, solely one species or a combination of two or more species can be used.

To the substrate (e.g. a resin film substrate), various additives can be added as necessary, such as a filler (inorganic filler, organic filler, etc.), anti-aging agent, antioxidant, UV absorber, antistatic agent, slip agent, plasticizer and colorant (pigment, dye, etc.). The amount of the various additives is usually about 30 % by weight or less (e.g. 20 % by weight or less, typically 10 % by weight or less) in the substrate. For instance, when a pigment (e.g. white pigment) is included in the substrate, the pigment content is suitably about 0.1 % to 10 % by weight (e.g. 1 % to 8 % by weight, typically 1 % to 5 % by weight).

The thickness of the substrate is not particularly limited and can be suitably selected in accordance with the purpose. In general, it is about 1 μm to 500 μm. From the standpoint of the handling properties of the substrate, the thickness of the substrate can be, for instance, 1.5 μm or greater, 2 μm or greater, 3 μm or greater, 4 μm or greater, or even 4.5 μm or greater. From the standpoint of making the PSA sheet thinner, in some embodiment, the thickness of the substrate can be, for instance, 150 μm or less, 100 μm or less, 50 μm or less, 25 μm or less, 20 μm or less, 10 μm or less, 7 μm or less, less than 5 μm, or even less than 4 μm.

The thickness (total thickness) of the PSA sheet disclosed herein (which includes the PSA layer and further includes the substrate in a substrate-supported PSA sheet, but excludes any release liner) is not particularly limited. It can be in a range of, for instance, about 2 μm to 1000 μm. In some embodiments, in view of the adhesive properties, etc., the thickness of the PSA sheet is preferably about 5 μm to 500 μm (e.g. 10 μm to 300 μm, typically 15 μm to 200 μm). Alternatively, in some embodiments where thinning is considered important, the PSA sheet may have a thickness of 100 μm or less (e.g. 5 μm to 100 μm), 70 μm or less (e.g. 5 μm to 70 μm), or even 45 μm or less (e.g. 5 μm to 45 μm).

In the PSA sheet disclosed herein, biomass-derived carbons preferably account for more than 40 % of the total carbon content therein. In other words, the PSA sheet preferably has a biomass carbon ratio above 40 %. With the use of a PSA sheet with such a high biomass carbon ratio, the usage of fossil-resource-based materials can be reduced. From such a standpoint, it can be said that the higher the biomass carbon ratio of the PSA sheet is, the more preferable it is. The biomass carbon ratio of the PSA sheet is preferably 50 % or higher, possibly 60 % or higher, 70 % or higher, 75 % or higher, or even 80 % or higher. The maximum biomass carbon ratio of the PSA sheet is 100 % by definition; however, in view of the adhesive properties, in some embodiments, the biomass carbon ratio can be, for instance, 95 % or lower. When adhesive properties are of greater importance, it can be 90 % or lower, or even 85 % or lower.

It is noted that in a substrate-free PSA sheet formed of a PSA layer, the biomass carbon ratio of the PSA layer equals that of the entire PSA sheet. Thus, when the PSA sheet disclosed herein is a substrate-free PSA sheet, the biomass carbon ratio of the substrate-free PSA sheet is 50 % or higher, typically 50 % or higher and lower than 100 %.

The PSA sheet disclosed herein preferably has a peel strength to stainless steel plate of 3 N/20mm or greater. The PSA sheet showing such properties strongly bonds to an adherend; and therefore, typically it can be preferably used in an embodiment where it does not intend re-peeling. From the standpoint of achieving more highly reliable bonding, the peel strength can be, more preferably 4 N/20mm or greater, yet preferably 5 N/20mm or greater, or possibly 6 N/20mm or greater. In some embodiments, the peel strength can be 12 N/20mm or greater, 14 N/20mm or greater, or even 16 N/20mm or greater. The maximum peel strength is not particularly limited. In general, the higher the more preferable. On the other hand, from the standpoint of facilitating to increase the biomass carbon ratio of the PSA, in some embodiments, the peel strength can be, for instance, 50 N/20mm or less, 40 N/20mm or less, or even 30 N/20mm or less. Hereinafter, the peel strength may be referred to as the to-SUS peel strength as well.

The to-SUS peel strength can be determined by the following method: A PSA sheet is cut to a 20 mm wide, 150 mm long size to prepare a measurement sample. In an environment at 23 °C and 50 % RH, the adhesive face of the measurement sample is exposed and press-bonded to a stainless steel plate (SUS304BA plate) as the adherend with a 2 kg rubber roller moved back and forth once. The resultant is left standing in an environment at 50 °C for two hours. Subsequently, in an environment at 23 °C and 50 % RH, using a tensile tester, the peel strength (180° peel strength) (N/20mm) is determined at a peel angle of 180°, at a tensile speed of 300 mm/min, based on JIS Z0237:2000. As the tensile tester, a universal tensile/compression testing machine (machine name "tensile and compression testing machine, TCM-lkNB" available from Minebea Co., Ltd.) can be used. The same method has been used in the working examples described later as well.

It is noted that, for the measurement, a suitable backing material can be applied to the PSA sheet subject to measurement to reinforce it as necessary (e.g. in case of a substrate-free double-faced PSA sheet, in case of a substrate-supported PSA sheet whose substrate is susceptible to deformation, etc.). The same applies to the heat-resistant holding power test described below. As the backing material, for instance, PET film of about 25 μm in thickness can be used. Such a backing material was used in the working examples described later.

The PSA sheet disclosed herein preferably has a level of heat-resistant holding properties such that a test piece thereof will not fall off for at least 60 minutes in a heat-resistant holding power test carried out with a load of 500 g at a temperature of 80 °C. The PSA sheet having such heat-resistant holding properties can provide good holding even in a temperature range above room temperature; and therefore, it can be preferably used for fixing and attaching parts, etc. The heat-resistant holding power test can be carried out by the following method: In particular, the PSA sheet

is cut to a 10 mm wide, 100 mm long size to prepare a measurement sample. In an environment at 23 °C and 50 % RH, each adhesive face of the measurement sample is press-bonded to a Bakelite plate (phenol resin plate) over a 10 mm wide, 20 mm long bonding area with a 2 kg roller moved back and forth once. In an environment at 80 °C, the adherend along with the test piece applied thereon is vertically suspended and left standing for 30 minutes with the test piece's length direction coinciding with the vertical direction. Subsequently, to the free end of the test piece, a load of 500 g is applied; and based on JIS Z0237, the resultant is left standing for 60 minutes in the environment at 80 °C with the load applied. After 60 minutes, the test piece is checked to see if it has fallen off the Bakelite plate.

<Applications>

The PSA composition disclosed herein comprises an acrylic PSA having a high biobased content; and therefore, in various applications using conventional general acrylic PSA (i.e. an acrylic PSA having a low biobased content), it can be used as a substitute for the acrylic PSA to contribute to reduction of the dependence on fossil-resource-based materials. The PSA sheet disclosed herein can be preferably used, typically as a double-faced PSA sheet, to fix or attach parts. For instance, it can be preferably used for fixing parts in portable electronic devices.
The matters disclosed herein include the following:

(1) A PSA composition comprising a PSA, wherein

the PSA is an acrylic PSA comprising an acrylic polymer,
the acrylic polymer is a polymer of monomers that include more than 50 % (by weight) acrylic monomer, and
at least 50 % of all carbons in the PSA are biomass-derived carbons.

(2) The PSA composition according to (1) above, wherein the monomers include more than 70 % (by weight) alkyl (meth)acrylate having a biomass-derived alkyl group with 12 or more carbon atoms at the ester terminus.
(3) The PSA composition according to (2) above, wherein the alkyl (meth)acrylate comprises a branched alkyl (meth)acrylate having a biomass-derived branched alkyl group with 12 or more carbon atoms at the ester terminus, and
the branched alkyl (meth)acrylate accounts for at least 20 % (by weight) of the alkyl (meth)acrylate.
(4) The PSA composition according to (2) or (3) above, wherein the monomers include two or more species of alkyl (meth)acrylate having different biomass-derived alkyl groups with 12 or more carbon atoms.
(5) The PSA composition according to any of (1) to (4) above, wherein the monomers include more than 70 % (by weight) alkyl (meth)acrylate having a biomass-derived alkyl group with 16 or more carbon atoms at the ester terminus.
(6) The PSA composition according to (5) above, wherein the alkyl (meth)acrylate includes a branched alkyl (meth)acrylate having a biomass-derived branched alkyl group with 16 or more carbon atoms at the ester terminus and the branched alkyl (meth)acrylate accounts for at least 20 % by weight of the alkyl (meth)acrylate.
(7) The PSA composition according to (5) or (6) above, wherein the monomers include two or more species of alkyl (meth)acrylate having different biomass-derived alkyl groups with 16 or more carbon atoms.
(8) The PSA composition according to any of (1) to (7) above, wherein the monomers include more than 1 % (by weight) carboxy group-containing monomer.
(9) The PSA composition according to any of (1) to (8) above, wherein the monomers include a carboxy group-containing monomer and a hydroxy group-containing monomer, and the carboxy group-containing monomer content is at least 0.5 times (by weight) the hydroxy group-containing monomer content.
(10) The PSA composition according to any of (1) to (7) above, wherein the monomers include at least one species of polar group-containing monomer selected from the group consisting of a carboxy group-containing monomer, a hydroxy group-containing monomer and a monomer having a nitrogen atom-containing ring (an N-hetero-ring containing monomer).
(11) The PSA composition according to (10) above, wherein the polar group-containing monomer content of the monomers is higher than 1 % by weight and 40 % by weight or lower.
(12) The PSA composition according to any of (1) to (11) above, wherein the monomers include a carboxy group-containing monomer and a monomer having a nitrogen atom-containing ring (an N-hetero-ring containing monomer), with the N-hetero-ring containing monomer content being at least 1 times up to 20 times (by weight) the carboxy group-containing monomer content.
(13) The PSA composition according to any of (1) to (12) above, wherein the PSA further comprises a tackifier and at least 50 % of all carbons in the tackifier are biomass-derived carbons.
(14) The PSA composition according to any of (1) to (13) above, wherein at least 60 % of all carbons in the PSA are biomass-derived carbons.
(15) The PSA composition according to any of (1) to (14) above, that is a UV curable PSA composition or a solvent-based PSA composition.

(16) A PSA sheet having a PSA layer formed from the PSA composition according to any of (1) to (15) above.

(17) The PSA sheet according to (16) above, wherein the PSA layer has a thickness of 3 μm or greater and 200 μm or less.

(18) The PSA sheet according to (16) or (17) above, formed as a substrate-supported or substrate-free double-faced PSA sheet.

(19) The PSA sheet according to any of (16) to (18) above, wherein more than 40 % of all carbons in the PSA sheet are biomass-derived carbons.

(20) The PSA sheet according to any of (16) to (19) above, having a peel strength of 3 N/20mm or greater to a stainless steel plate.

EXAMPLES

Several working examples related to the present invention are described below, but these working examples are not to limit the present invention. In the description below, "parts" and "%" are by weight unless otherwise specified.

(Preparation of PSA compositions)

(Example 1)

To a reaction vessel equipped with a stirrer, thermometer, nitrogen inlet, reflux condenser and addition funnel, were added, as monomers, 92.5 parts of a biomass-derived C24 Guerbet acrylate, 7 parts of acrylic acid (AA) and 0.5 part of 4-hydroxybutyl acrylate (4HBA) as well as ethyl acetate as the polymerization solvent. The resulting mixture was allowed to stir under a nitrogen flow for two hours to eliminate oxygen from the polymerization system. Subsequently, was added 0.2 part of 2,2'-azobisisobutylonitrile as the polymerization initiator and solution polymerization was carried out at 60 °C for 8 hours to obtain an acrylic polymer solution. The acrylic polymer solution was used as the PSA composition according to Example 1.

It is noted that the biomass-derived C24 Guerbet acrylate ("C24" in Table 1) is an acrylate having a biomass-derived branched $C_{24}$ alkyl group at the ester terminus, or more specifically, a compound of the formula (1) wherein $R^1$ is a hydrogen atom, $R^2$ is a biomass-derived linear $C_{12}$ alkyl group, and $R^3$ is a biomass-derived linear $C_{10}$ alkyl group.

(Example 2)

To the acrylic polymer solution obtained in Example 1, for 100 parts of acrylic polymer in the solution, was added 0.1 part of an epoxy-based crosslinking agent (product name TETRAD-C; 1,3-bis(N,N-diglycidylaminomethyl)cyclohexane available from Mitsubishi Gas Chemical Company, Inc.; "epoxy-based crosslinking agent B" hereinafter). The resultant was evenly mixed to obtain a PSA composition.

(Example 3)

To the acrylic polymer solution obtained in Example 1, for 100 parts of acrylic polymer in the solution, were added 3 parts of an isocyanate-based crosslinking agent (product name CORONATE L; a 75 % ethyl acetate solution of trimethylolpropane-tolylene diisocyanate trimer adduct available from Nippon Polyurethane Industry Co., Ltd.; "isocyanate-based crosslinking agent A" hereinafter) and 30 parts of product name YS POLYSTER S-145 (terpene-phenol resin, softening point of about 145 °C, hydroxyl value 70 to 110 mgKOH/g, 73 % biobased content) available from Yasuhara Chemical Co., Ltd., as the tackifier resin. The resultant was evenly mixed to obtain a PSA composition.

(Example 4)

The monomer composition was modified as shown in Table 1. Otherwise in the same manner as Example 1, was obtained an acrylic polymer solution. Here, "C16" in Table 1 represents an acrylate having a biomass-derived branched $C_{16}$ alkyl group at the ester terminus, or more specifically, a compound (biomass-derived C16 Guerbet acrylate) of the formula (1) wherein $R^1$ is a hydrogen atom, $R^2$ is a biomass-derived linear $C_8$ alkyl group, and $R^3$ is a biomass-derived linear $C_6$ alkyl group. The acrylic polymer solution was used as the PSA composition according to this Example.

(Example 5)

The monomer composition was modified as shown in Table 1. Otherwise in the same manner as Example 1,

was obtained an acrylic polymer solution. Here, "LA" in Table 1 represents lauryl acrylate having a biomass-derived linear $C_{12}$ alkyl group at the ester terminus. The acrylic polymer solution was used as the PSA composition according to this Example.

(Example 6)

Were mixed 40 parts of a biomass-derived C24 Guerbet acrylate (C24), 59 parts of an acrylate having a biomass-derived linear $C_{18}$ alkyl group at the ester terminus (a biomass-derived C18 Guerbet acrylate; "C18" in Table 2), 10 parts of AA and 1 part of 4HBA as well as 0.05 part of 2,2-dimethoxy-1,2-diphenylethane-1-one (available from IGM Resins, product name OMNIRAD 651) and 0.05 part of 1-hydroxycyclohexyl phenyl ketone (available from IGM Resins, product name OMNIRAD 184) as photopolymerization initiators. The resulting mixture was irradiated by UV under nitrogen atmosphere to prepare a partial polymerization product (monomer syrup). To 100 parts of the resulting monomer syrup, were added 0.3 part of dipentaerythritol hexaacrylate (DPHA) (available from Shin-Nakamura Chemical Co., Ltd.) and 0.05 part of OMNIRAD 651. The resultant was evenly mixed to prepare a PSA composition.

(Example 7)

Were mixed 40 parts of a biomass-derived C24 Guerbet acrylate (C24), 59 parts of a biomass-derived C18 Guerbet acrylate (C18), 6 parts ofAA, 1 part of 4HBA and 10 parts of N-vinyl-2-pyrrolidone (NVP) as well as 0.05 part of OMNIRAD 651 and 0.05 part of OMNIRAD 184 as photopolymerization initiators. The resulting mixture was irradiated by UV under nitrogen atmosphere to prepare a partial polymerization product (monomer syrup). To 100 parts of the resulting monomer syrup, were added 0.3 part of DPHA and 0.05 part of OMNIRAD 651, and evenly mixed to prepare a PSA composition.

(Example 8)

Were mixed 40 parts of a biomass-derived C24 Guerbet acrylate (C24), 59 parts of an acrylate having a biomass-derived linear $C_{14}$ alkyl group at the ester terminus (a biomass-derived C14 Guerbet acrylate; "C14" in Table 2), 6 parts ofAA, 1 part of 4HBA and 10 parts of NVP as well as 0.05 part of OMNIRAD 651 and 0.05 part of OMNIRAD 184 as photopolymerization initiators. The resulting mixture was irradiated by UV under nitrogen atmosphere to prepare a partial polymerization product (monomer syrup). To 100 parts of the resulting monomer syrup, were added 0.05 part of DPHA and 0.05 part of OMNIRAD 651, and evenly mixed to prepare a PSA composition.

(Example 9)

Were mixed 60 parts of a biomass-derived C24 Guerbet acrylate (C24), 39 parts of a biomass-derived C14 Guerbet acrylate (C14), 6 parts ofAA, 1 part of 4HBA and 10 parts of NVP as well as 0.05 part of OMNIRAD 651 and 0.05 part of OMNIRAD 184 as photopolymerization initiators. The resulting mixture was irradiated by UV under nitrogen atmosphere to prepare a partial polymerization product (monomer syrup). To 100 parts of the resulting monomer syrup, were added 0.05 part of DPHA and 0.05 part of OMNIRAD 651, and evenly mixed to prepare a PSA composition.

(Example 10)

Were mixed 50 parts of a biomass-derived C24 Guerbet acrylate (C24), 44 parts of a biomass-derived C14 Guerbet acrylate (C14), 7 parts of AA and 15 parts of NVP as well as 0.05 part of OMNIRAD 651 and 0.05 part of OMNIRAD 184 as photopolymerization initiators. The resulting mixture was irradiated by UV under nitrogen atmosphere to prepare a partial polymerization product (monomer syrup). To 100 parts of the resulting monomer syrup, were added 0.05 part of DPHA and 0.05 part of OMNIRAD 651, and evenly mixed to prepare a PSA composition.

(Example 11)

Were mixed 90 parts of a petroleum-derived (i.e. non-biomass-derived) isononyl acrylate (C9) and 10 parts of AA as well as 0.05 part of OMNIRAD 651 and 0.05 part of OMNIRAD 184 as photopolymerization initiators. The resulting mixture was irradiated by UV under nitrogen atmosphere to prepare a partial polymerization product (monomer syrup). To 100 parts of the resulting monomer syrup, were added 0.3 part of trimethylolpropane triacrylate (TMPTA) (available from Osaka Organic Chemical Industry Ltd., product name VISCOAT#295) and 0.05 part of OMNIRAD 651, and evenly mixed to prepare a PSA composition.

(Preparation of PSA sheets)

Using the solvent-based PSA compositions of Examples 1 to 5, were prepared PSA sheets by the procedures shown below.

In particular, to the release face of a 38 μm thick release liner (DIAFOIL MRF38 available from Mitsubishi Polyester Film, Inc.) having a release face formed with a silicone-based release agent on one face of polyester film, was applied the PSA composition according to each Example and allowed to dry at 100 °C for 2 minutes to form a 30 μm thick PSA layer. To the PSA layer, was adhered the release face of a 25 μm thick release liner (DIAFOIL MRF25 available from Mitsubishi Polyester Film, Inc.) having a release face formed with a silicone-based release agent on one face of polyester film. In such manners, were obtained substrate-free double-faced PSA sheets according to Examples 1 to 5 in a form in which each surfaces of the PSA layer were protected by the two polyester release liners.

Using the UV curable PSA compositions of Examples 6 to 11, were prepared PSA sheets by the procedures shown below.

In particular, to the release face of a 38 μm thick release liner (DIAFOIL MRF38 available from Mitsubishi Polyester Film, Inc.) having a release face formed with a silicone-based release agent on one face of polyester film, was applied the PSA composition prepared above to a final thickness shown in Table 2 to form a coating layer. Subsequently, the surface of the coating layer was covered with a 38 μm thick release liner (DIAFOIL MRE38 available from Mitsubishi Polyester Film, Inc.) having a release face formed with a silicone-based release agent on one face of polyester film, with the release face of the film placed on the coating layer side. By this, the coating layer was blocked from oxygen. Using a chemical light lamp (available from Toshiba Corporation), the sheet thus obtained with the coating layer was irradiated by UV light at an irradiance of 5 $mW/cm^2$ for 360 seconds to allow the coating layer to cure and form a PSA layer. In such manners, were obtained substrate-free double-faced PSA sheets according to Examples 6 to 11, with the each faces of the PSA layer protected with two polyester release liners. It is noted that the irradiance value was determined with an industrial UV checker (available from Topcon Corporation, product name UVR-T1 with light detector model number UD-T36) with peak sensitivity at 350 nm in wavelength.

(Measurement and Evaluation)

The peel strength of the PSA sheets obtained in the respective Examples as well as the heat-resistant holding properties of the PSA sheets obtained in Examples 6 to 11 were tested by the methods described earlier. In addition, with respect to the PSA sheet (a substrate-free double-faced PSA sheet formed of a PSA layer) according to each Example, the biobased content of the PSA forming the PSA layer was determined based on ASTM D6866. The results are shown in Tables 1 and 2. In Table 2, "G" for the heat-resistant holding properties indicates that the test piece did not fall off after 60 minutes (i.e. good heat-resistant holding properties). It is noted that, with respect to the PSA sheets of Examples 7 to 11, it was confirmed that neither of the test piece fell off after 60 minutes when the heat-resistant holding power test was carried out with the load changed from 500 g to 1 kg.

[Table 1]

Table 1

| Example | | 1 | 2 | 3 | 4 | 5 |
|---|---|---|---|---|---|---|
| Monomers (wt%) | C24/AA/4HBA=92.5/7/0.5 | 100 | 100 | 100 | - | - |
| | C24/C16/AA/4HBA=67.5/25/7/0.5 | - | - | - | 100 | - |
| | C24/LA/AA/4HBA=83.5/9/7/0.5 | - | - | - | - | 100 |
| Tackifier resin (parts by wt) 1) | YS Polyster S145 | - | - | 30 | - | - |
| Crosslinking agent1) (parts by wt) | Coronate L | - | - | 3 | - | |
| | Tetrad C | - | 0.1 | - | - | - |
| Biobased content (%) | | 83.3 | 83.3 | 79.0 | 82.3 | 82.4 |
| Thickness (μm) | | 30 | 30 | 30 | 30 | 30 |
| Peel strength (N/20mm) | | 5.2 | 5.6 | 9.0 | 6.5 | 7.2 |
| 1) Amount used relative to 100 parts by weight of acrylic polymer | | | | | | |

[Table 2]

Table 2

| Example | | 6 | 7 | 8 | 9 | 10 | 11 |
|---|---|---|---|---|---|---|---|
| Monomers (wt%) | C24/C18/AA/4HBA=36/54/9/1 | 100 | - | - | - | - | - |
| | C24/C18/AA/4HBA/NVP=34/51/5/1/9 | - | 100 | - | | - | - |
| | C24/C14/AA/4HBA/NVP=34/51/5/1/9 | - | - | 100 | - | - | - |
| | C24/C14/AA/4HBA/NVP=51/34/5/1/9 | - | - | - | 100 | - | - |
| | C24/C14/AA/NVP=43/38/6/13 | - | - | - | - | 100 | - |
| | C9/AA=90/10 | - | - | - | - | - | 100 |
| Polyfunctional monomer (parts by wt) 2) | TMPTA | - | - | - | - | - | 0.3 |
| | DPHA | 0.3 | 0.3 | 0.05 | 0.05 | 0.05 | - |
| Biobased content (%) | | 78 | 75 | 73 | 74 | 70 | 0 |
| Thickness (μm) | | 80 | 80 | 50 | 50 | 50 | 50 |
| Peel strength (N/20mm) | | 25 | 16 | 10.8 | 8.8 | 13 | 13 |
| Heat-resistant holding properties (80 °C, 500 g, 1 h) | | G | G | G | G | G | G |
| 2) Amount used relative to 100 parts by weight of monomer syrup | | | | | | | |

As shown in Tables 1 and 2, the PSA sheets of Examples 1 to 10 having PSA layers formed with acrylic PSAs with high biobased contents showed comparable adhesive properties to the PSA sheet of Example 11 whose PSA had zero biobased content, considering the differences in thickness of PSA layer.

Although specific embodiments of the present invention have been described in detail above, these are merely for illustrations and do not limit the scope of claims. The art according to the claims includes various modifications and changes made to the specific embodiments illustrated above.

[Reference Signs List]

1, 2, 3 PSA sheets
10 support substrate
10A first face
10B second face (backside)
21 PSA layer (first PSA layer)
21A adhesive face (first adhesive face)
21B second adhesive face
22 PSA layer (second PSA layer)
22A adhesive face (second adhesive face)
31, 32 release liners
100, 200, 300 release-linered PSA sheets

## Claims

**1.** A pressure-sensitive adhesive composition comprising a pressure-sensitive adhesive, wherein
the pressure-sensitive adhesive is an acrylic pressure-sensitive adhesive comprising an acrylic polymer,
the acrylic polymer is a polymer of monomers that include more than 50 % (by weight) acrylic monomer, and
at least 50 % of all carbons in the pressure-sensitive adhesive are biomass-derived carbons.

2. The pressure-sensitive adhesive composition according to Claim 1, wherein the monomers include more than 70 % (by weight) alkyl (meth)acrylate, the alkyl (meth)acrylate having a biomass-derived alkyl group with 12 or more carbon atoms at its ester terminus.

3. The pressure-sensitive adhesive composition according to Claim 2, wherein
the alkyl (meth)acrylate comprises a branched alkyl (meth)acrylate that has a biomass-derived branched alkyl group with 12 or more carbon atoms at its ester terminus, and
the branched alkyl (meth)acrylate accounts for at least 20 % by weight of the alkyl (meth)acrylate.

4. The pressure-sensitive adhesive composition according to Claim 2 or 3, wherein the monomers include two or more species of alkyl (meth)acrylate having different biomass-derived alkyl groups with 12 or more carbon atoms.

5. The pressure-sensitive adhesive composition according to any one of Claims 1 to 4, wherein the monomers include more than 1 % (by weight) carboxy group-containing monomer.

6. The pressure-sensitive adhesive composition according to any one of Claims 1 to 5, wherein
the monomers include a carboxy group-containing monomer and a hydroxy group-containing monomer, and
the carboxy group-containing monomer content is at least 0.5 times (by weight) the hydroxy group-containing monomer content.

7. The pressure-sensitive adhesive composition according to any one of Claims 1 to 6, wherein
the pressure-sensitive adhesive further comprises a tackifier, and
at least 50 % of all carbons in the tackifier are biomass-derived carbons.

8. The pressure-sensitive adhesive composition according to any one of Claims 1 to 7, wherein at least 60 % of all carbons in the pressure-sensitive adhesive are biomass-derived carbons.

9. A pressure-sensitive adhesive sheet having a pressure-sensitive adhesive layer formed from the pressure-sensitive adhesive composition according to any one of Claims 1 to 8.

[Fig. 1]

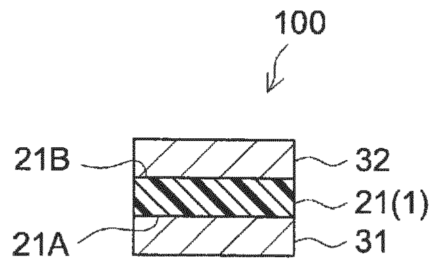


[Fig. 2]

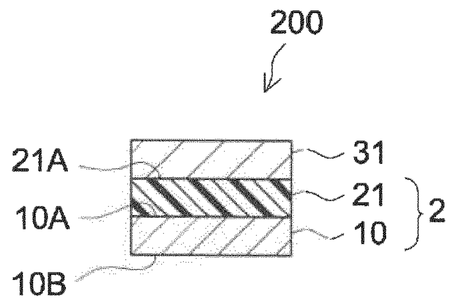


[Fig. 3]

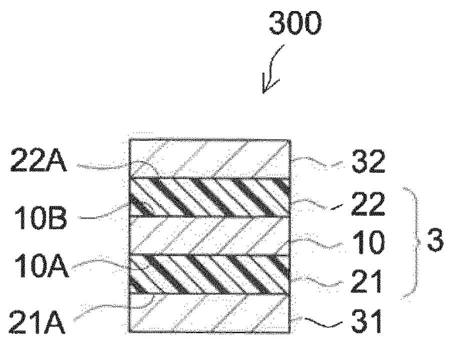

Europäisches Patentamt
European Patent Office
Office européen des brevets

# EUROPEAN SEARCH REPORT

Application Number
EP 19 21 8680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2011/237725 A1 (CLAPPER JASON D [US] ET AL) 29 September 2011 (2011-09-29) * paragraphs [0009] - [0014], [0025]; examples 39-68; tables 1,3,7,9 * | 1-9 | INV. C08F220/18 C08F265/06 C08G18/62 C09J4/06 C09J133/08 C09J175/04 |
| X<br>Y | US 2016/009628 A1 (COLBY JOSHUA L [US] ET AL) 14 January 2016 (2016-01-14) * paragraphs [0001], [0043] - [0058], [0059], [0079], [0110], [0137]; examples 4,6; tables 1-3 * | 1,2,5,8,9<br>1-9 | |
| X | US 2010/167614 A1 (LU YING-YUH [US] ET AL) 1 July 2010 (2010-07-01) * paragraphs [0001], [0013], [0034]; examples 1,3; tables 2,3 * | 1,8,9 | |

TECHNICAL FIELDS SEARCHED (IPC)

C08F
C08G
C09J

The present search report has been drawn up for all claims

1

| Place of search | Date of completion of the search | Examiner |
|---|---|---|
| The Hague | 28 April 2020 | Plehiers, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 21 8680

This annex lists the patent family members relating to the patent documents cited in the above-mentioned European search report. The members are as contained in the European Patent Office EDP file on
The European Patent Office is in no way liable for these particulars which are merely given for the purpose of information.

28-04-2020

| Patent document cited in search report | Publication date | Patent family member(s) | Publication date |
|---|---|---|---|
| US 2011237725 A1 | 29-09-2011 | CN 102822297 A | 12-12-2012 |
| | | EP 2553032 A1 | 06-02-2013 |
| | | JP 5975979 B2 | 23-08-2016 |
| | | JP 2013523913 A | 17-06-2013 |
| | | KR 20130040188 A | 23-04-2013 |
| | | US 2011237725 A1 | 29-09-2011 |
| | | WO 2011119363 A1 | 29-09-2011 |
| US 2016009628 A1 | 14-01-2016 | BR 112015023594 A2 | 18-07-2017 |
| | | CN 105050998 A | 11-11-2015 |
| | | EP 2970093 A1 | 20-01-2016 |
| | | KR 20150128971 A | 18-11-2015 |
| | | US 2016009628 A1 | 14-01-2016 |
| | | WO 2014151179 A1 | 25-09-2014 |
| US 2010167614 A1 | 01-07-2010 | BR PI0918319 A2 | 30-05-2017 |
| | | CN 102317396 A | 11-01-2012 |
| | | EP 2379665 A2 | 26-10-2011 |
| | | JP 2012514083 A | 21-06-2012 |
| | | KR 20110099756 A | 08-09-2011 |
| | | US 2010167614 A1 | 01-07-2010 |
| | | WO 2010075387 A2 | 01-07-2010 |



For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014196471 A
- JP 5975979 B


### Non-patent literature cited in the description


- **C. A. DAHLQUIST.** Adhesion: Fundamental and Practice. McLaren & Sons, 1966, 143
- Polymer Handbook. John Wiley & Sons, Inc, 1989